# EUROPÄISCHE PATENTANMELDUNG

(11) **EP 2 408 089 A2**
(43) Veröffentlichungstag der Anmeldung: **18.01.2012**
(21) Anmeldenummer: 11168209.2
(22) Anmeldetag: 31.05.2011
(51) Int. Cl.: H02K 1/30, H02K 1/27

(54) **Rotor für einen Elektromotor, Elektromotor und Herstellungsverfahren für einen Elektromotor**

(30) Priorität: 15.07.2010 DE 102010031399
(71) Anmelder: HILTI Aktiengesellschaft, 9494 Schaan (LI)
(72) Erfinder: Riedl, Reinhard, 86923 Finning (DE); Erhardt, Jochen, 86836 Klosterlechfeld (DE)

(57) **Zusammenfassung**

Rotor 100 für einen Elektromotor 1000, wobei der Rotor 100 aufweist:
-eine Rotorwelle 10;
-ein an der Rotorwelle 10 angebrachtes Rotorpaket 20 mit einer Anzahl von entlang einer Achse A des Rotorpakets 20 angeordneten Paketblechen 40, 140 und mit einer Anzahl von Polen wenigstens eines Polpaares, wobei ein Paketblech 40, 140 aufweist:
eine zentrale von der Rotorwelle 10 durchsetzte, eine Kontur 71, 171 aufweisende Ausnehmung 70, 170 und daran angrenzende Flächen AF und eine Anzahl von an peripheren Winkelpositionen angeordnete Aufnahmestrukturen zur Bildung jeweils einer Aufnahme für ein polbildendes Element am Rotorpaket 20. Erfindungsgemäß ist dabei vorgesehen, dass das Rotorpaket eine der Rotorwelle 10 zugewandte Oberfläche OF hat, die mit den angrenzenden Flächen AF der zentralen Ausnehmung 70, 170 der Anzahl von Paketblechen 40, 140 gebildet ist und die mit den Konturen 71, 171 der zentralen Ausnehmungen 70 der Anzahl von Paketblechen 40, 140 gebildete Unebenheiten quer zur Achse A des Rotorpakets 20 aufweist, wobei die Konturen 71, 171 der zentralen Ausnehmungen 70, 170 wenigstens eines ersten und
zweiten Paketblechs der Anzahl von Paketblechen 40, 140 nichtkongruent zueinander angeordnet sind.

## Beschreibung

### Technisches Gebiet

Die Erfindung betrifft einen Rotor für einen, insbesondere permanent erregten, Elektromotor. Die Erfindung betrifft auch ein Herstellungsverfahren für einen Rotor bzw. einen Elektromotor.

### Stand der Technik

Ein Rotor der eingangs genannten Art für einen permanent erregten Elektromotor ist beispielsweise aus JP 2005 012859 bekannt. Es ist bekannt verschiedene Klebe-, Schweiß-oder Laminiertechniken zu nutzen, um ein Rotorpaket an einer Rotorwelle zu fixieren oder Paketbleche des Rotorpakets aneinander anzuordnen. Ein Rotorpaket wird bei JP 2002 354722 mittels eines Kunststoffspritzvorganges mit der Rotorwelle verbunden. Es ist auch bekannt, ein Rotorpaket mittels einer Pressverbindung auf einer glatten oder gerändelten Rotorwelle aufzupressen.23

Bei einem permanent erregten Elektromotor, wie einem BLDC- oder BLAC-Elektromotor, kann ein Permanentmagnet in einen mit einer Aufnahmeöffnung gebildeten Schacht des Rotorpakets eingebracht und dort fixiert werden. Aufnahmeöffnungen können -wie in WO 2006/090567 A1 gezeigt- einen schräg ausgerichteten Schacht ausbilden oder mit unterschiedlichen Neigungswinkel relativ zu einer zentralen, von der Welle durchsetzten Ausnehmung des Rotorpakets orientiert sein.

Problematisch bei vorgenannten Verbindungsarten ist grundsätzlich die relativ aufwendige Montage. So lassen sich die Toleranzen beim Aufbringen einzelner Paketbleche zur Bildung des Rotorpakets auf einer Rotorwelle nicht ausreichend genau bestimmen, was meistens einen nachträglichen Arbeitsvorgang, nämlich ein aufwändiges Auswuchten des Rotors, erforderlich macht. Beim Auswuchten kann insbesondere die Anbringung von Wuchtkörpern am Rotor Nachteile für den späteren Betrieb mit sich bringen. Eine Erkennung einer Rotorstellung erfolgt regelmäßig unter Nutzung eines Hall-Sensors am Stator des Elektromotors, welcher die Stellung des Rotors relativ zum Stator sensiert. Im Betrieb wird dies zur Steuerung einer magnetischen Kopplung zwischen Rotor und Stator, d.h. zur Steuerung des Elektromotors genutzt.

Außerdem ist es regelmäßig erforderlich die Permanentmagnete aufwendig zueinander zu justieren und zu fixieren um im Betrieb des Elektromotors eine Rotorstellung exakt erkennen zu können. Ein bloßes Verkleben oder ein Verklemmen eines Permanentmagneten in einer peripheren Aufnahmeöffnung des Rotorpakets bzw. eines Paketblechs hat sich unter diesem Aspekt als unzureichend erwiesen. Hier laufen Bedingungen für eine sichere Fixierung eines Permanentmagneten und Bedingungen für eine exakte Positionierung eines Permanentmagneten auseinander. Erstere benötigen regelmäßig einen erhöhten Raumbedarf und für letztere ist eine möglichst geringe Raumtoleranz zu bevorzugen. Wünschenswert wäre ein Rotorpaket bei dem eine gleichzeitig sichere und dennoch exakte Anbringung an der Rotorwelle und/oder Ausbildung einer Aufnahme für ein polbildendes Element am Rotorpaket ermöglicht ist. Wünschenswert wäre auch ein möglichst vereinfachtes Herstellungsverfahren für einen verbesserten Rotor bzw. Elektromotor. Möglichst sollte ein Rotor nicht nachjustiert bzw. ausgewuchtet werden müssen nachdem Rotorwelle sowie Rotorpaket mit Permanentmagneten assembliert sind.

### Darstellung der Erfindung

An dieser Stelle setzt die Erfindung an, deren Aufgabe es ist, einen Rotor, einen Elektromotor und ein Herstellungsverfahren für einen Rotor bzw. einen Elektromotor anzugeben, bei dem eine Herstellung eines Rotors bzw. eines Elektromotors vereinfacht ist und dennoch eine Fertigungstoleranz und/oder Fertigungsqualität beim Rotor bzw. Elektromotor in ausreichendem Maße gewährleistet ist.

Insbesondere sollten bei einem Herstellungsverfahren bisher notwendige Justage- oder Auswucht-Schritte weitestgehend zu vermeiden oder zu vermindern sein und dennoch die Herstellung eines Rotors oder Elektromotors mit ausreichender bzw. verbesserter Fertigungsgenauigkeit ermöglicht sein.

Insbesondere sollte eine Anordnung eines Permanentmagneten relativ zu einem Paketblech in ausreichender oder verbesserter Weise gewährleistet und dennoch in der Herstellung vereinfacht sein. Insbesondere sollte ein Rotorpaket an der Rotorwelle -möglichst axial und radial- sicher und mit ausreichender Fertigungstoleranz fixiert sein. Insbesondere sollte eine Magnetfeldführung verbessert sein, vorzugsweise sollten dabei Mindestwerte für Luft- und Kriechstrecken einhaltbar sein. Insbesondere sollte auch eine Positionierung eines Lüfters und/oder eines Lagers relativ zum Rotorpaket vereinfacht und dennoch mit ausreichender Toleranz sowie sicher gewährleistet sein.

Die Aufgabe betreffend den Rotor wird durch die Erfindung mit einem eingangs genannten Rotor gelöst, bei dem erfindungsgemäß die Merkmale des kennzeichnenden Teils des Anspruchs 1 vorgesehen sind.

Im Rahmen des Konzepts der Erfindung ist vorgesehen, dass das Rotorpaket eine zur Rotorwelle gerichtete unebene Oberfläche hat, die u. a. mit angrenzenden Flächen und mit Konturen der zentralen Ausnehmung der Anzahl von Paketblechen gebildet ist. Dies kann insbesondere Kanten, Innenflächen und Seitenbereiche od.dgl. Bereiche von angrenzenden Flächen um die zentrale Ausnehmung umfassen. Bei der Oberfläche handelt es sich im Wesentlichen um eine Innenmantelseite des Rotorpakets, die einer Außenmantelseite der Rotorwelle zugewandt ist.

Im Bereich der zentralen Ausnehmung ergibt die, insbesondere verdrehte, Anordnung mindestens eines Teils der Anzahl von Paketblechen diese unebene Oberfläche. Diese wird insbesondere durch Unebenheiten in axialer Richtung des Rotorpakets gebildet, indem wenigstens ein Teil der Anzahl von Paketblechen betreffend die zentrale Ausnehmung nicht kongruent zueinander angeordnet sind. Das Konzept der Erfindung sieht vor, dass ein erstes Paketblech relativ zu einem zweiten Paketblech hinsichtlich der Aufnahmestruktur zur Bildung jeweils einer Aufnahme für ein polbildendes Element am Rotorpaket kongruent in Deckung zu bringen ist, während eine Kontur der zentralen Ausnehmung bei einer solchen, insbesondere verdrehten, Anordnung eines ersten und zweiten Paketblechs nichtkongruent zueinander zu liegen kommt. Dies führt zu einer bevorzugten vorgenannten unebenen Oberfläche in axialer Richtung des Rotorpakets.

Gemäß einer Weiterbildung ist beispielsweise vorgesehen, dass wenigstens anteilig Paketbleche gemäß einer mehrzähligen Drehsymmetrie der Aufnahmestrukturen gegeneinander verdreht sind - wenigstens ein erstes Paketblech relativ zu einem zweiten Paketblech z.B. bei Vorliegen einer vierzähligen Drehsymmetrie um 90° gegeneinander verdreht sind. Gemäß dem Konzept dieser Weiterbildung ist vorgesehen, dass eine Kontur der zentralen Ausnehmung nicht der mehrzähligen Drehsymmetrie der Aufnahmestrukturen folgt.

Das Konzept lässt sich insbesondere anhand der weiteren im folgenden erläuterten Weiterbildungen beispielhaft ausführen.

Insbesondere kann eine Kontur der zentralen Ausnehmung unregelmäßig von einer Kreisform abweichen. Als besonders bevorzugt hat sich eine von der geradzähligen Drehsymmetrie abweichende Kontur erwiesen, die eine ungeradzählige Drehsymmetrie hat. Insbesondere kann die zentrale Ausnehmung eines Paketblechs eine Kontur in Form eines Polygons oder eines konvexen bogen-vieleckigen Gleichdicks haben. Als besonders bevorzugt hat sich ein Reuleaux-Dreieck oder ein Pentagon oder ein siebeneckiges konvexes Bogen-Polygon oder ein anderes Gleichdick erwiesen. Unter einem Gleichdick ist insbesondere eine Kontur konstanter Breite -nicht aber ein Kreis- zu verstehen, bei der alle möglichen Durchmesser denselben Betrag haben. Insbesondere ist die Seitenzahl ungerade und alle Seiten sind gleich lang. Insbesondere eignet sich eine Kontur der zentralen Ausnehmung, die mit einer Rundheitsabweichung zwischen einem eingeschriebenen Kreis mit einem Innendurchmesser und einem umschriebenen Kreis mit einem Außendurchmesser verläuft. Die Rundheitsabweichung ist bevorzugt grösser als 0.1 %, insbesondere grösser als 0.5% insbesondere kleiner als 5%, insbesondere kleiner als 2% eines Mittels aus Innendurchmesser (Dᵢ) und Außendurchmesser (Dₐ) ist. Dies hat sich als besonders vorteilhaft zur Anbringung des Rotorpakets auf einer ggf. auch unbehandelten Oberfläche einer Rotorwelle erwiesen.

Beispielsweise wird für eine Kontur der zentralen Ausnehmung die Vieleckigkeit eines konvexen Bogen-Polygons derart gewählt, dass diese nicht mit der mehrzähligen Drehsymmetrie der Anordnung der Aufnahmestrukturen für ein polbildendes Element übereinstimmt. Als besonders bevorzugt hat sich beispielsweise die in der Zeichnung erläuterte Kombination einer vierzähligen Drehsymmetrie für Aufnahmeöffnungen Permanentmagnete oder Ankerzähne für Spulenwicklungen und die Wahl eines Pentagons oder eines Reuleaux-Dreiecks für die Kontur der zentralen Ausnehmung erwiesen. Bei einem vierpoligen Rotor eignet sich zur Verwirklichung des Konzepts der Weiterbildung bevorzugt die Wahl eines fünfeckigen konvexen Bogen-Polygons. In einer Abwandlung kann im Rahmen des Konzepts der Weiterbildung für einen zweipoligen Rotor ein Reuleaux-Dreieck, also ein dreieckiges konvexes Bogen-Polygon, für die Kontur der zentralen Ausnehmung gewählt werden. Grundsätzlich hat es sich als bevorzugt erwiesen, die mehrzählige Drehsymmetrie für die Aufnahmestrukturen geradzählig zu wählen und die Eckigkeit eines konvexen Bogen-Polygons für die zentrale Ausnehmung ungeradzählig zu wählen. Bevorzugt liegt die Zähligkeit der geradzähligen Drehsymmetrie für die Aufnahmestrukturen um "1" über der Zähligkeit der ungeradzähligen Drehsymmetie der Kontur der zentralen Ausnehmung. Eine derartige Kombination für die Gestaltung der Drehsymmetrie der Aufnahmestrukturen einerseits und der Kontur der zentralen Ausnehmung andererseits hat sich als besonders vorteilhaft für eine radiale und axiale sichere Anbringung eines Rotorpakets an einer Rotorwelle erwiesen. Insbesondere sind Fertigungstoleranzen unter Berücksichtigung von Mindestwerten für Luft- und Kriechstrecken gut einzuhalten, so dass magnetische Streufelder und sonstige Verluste weitgehend vermieden sind. Auch erweist sich eine Oberfläche in axialer Richtung des Rotorpakets auf einer Innenmantelseite derart uneben, dass sich gegenüber einer im Wesentlichen glatt zylindrisch ausgeführten Außenmantelseite der Rotorwelle ein komplexer Spaltraum ergibt. Der Spaltraum lässt sich je nach Bedarf zum Einbringen von Spritzpressmasse beim Fixieren des Rotorpakets an der Rotorwelle nutzen oder zum Einbringen von überschüssigem Fließmaterial beim Presspassen eines Rotorpakets auf eine Rotorwelle. Vorteilhaft kann bei der Fertigung ein Rotorpaket auch ohne eine besondere Oberflächenbehandlung der Rotorwelle - wie z. B. Rändeln der Aussenmantelseite der Rotorwelle - sicher fixiert werden.

Das Konzept der Erfindung führt auch auf einen Elektromotor, insbesondere permanent erregten Elektromotor, z. B. einen BLDC- oder BLAC-Elektromotor. Dieser weist eine magnetisch gekoppelte Anordnung aus Stator und Rotor auf, wobei der Rotor nach dem zuvor erläuterten Konzept der Erfindung ausgebildet ist und der Stator eine Anzahl von einem Polpaar des Rotors zugeordneten Statorpolen aufweist.

Dieser hat aufgrund seiner sicheren und genauen Assemblierung eine Höhere Leistung, insbesondere da das Herstellungsverfahren eine verbesserte Magnetfeldführung erlaubt und Mindestwerte für Luft- und Kriechstrecken aufgrund der genauen Fertigungstoleranzen eingehalten sind.

Das Konzept der Erfindung führt auch auf eine Handwerkzeugmaschine mit einem Elektromotor gemäss dem Konzept der Erfindung.

Das Konzept der Erfindung führt zur Lösung der Aufgabe betreffend das Herstellungsverfahren auf ein Herstellungsverfahren der eingangs genannten Art, mit dem sich auf besonders vorteilhafte Weise ein Rotor und/oder ein Elektromotor vergleichsweise einfach herstellen lässt und dennoch eine Anbringung des Rotorpakets an der Rotorwelle besonders sicher und mit hoher Genauigkeit möglich ist.

Das Herstellungsverfahren für einen Elektromotor sieht die magnetisch gekoppelte Anordnung des erfindungsgemäß hergestellten Rotors mit dem Stator vor, wobei der Stator eine Anzahl von einem Polpaar des Rotors zugeordnete Statorpole aufweist.

Das Herstellungsverfahren für einen Rotor weist erfindungsgemäß die Schritte auf:
- Bereitstellen der Rotorwelle;
- Anbringen eines Rotorpakets an der Rotorwelle mit einer Anzahl von entlang einer Achse des Rotorpakets angeordneten Paketblechen und einer Anzahl von an peripheren Winkelpositionen angeordneten Permanentmagneten unter Ausbildung von Polen wenigstens eines Polpaares,
   wobei ein Paketblech aufweist:
   eine zentrale von der Rotorwelle durchsetzte eine Kontur aufweisende Ausnehmung und daran angrenzende Flächen, und
   eine Anzahl von an peripheren Winkelpositionen angeordnete Aufnahmeöffnungen zur Bildung jeweils eines Schachtes für einen Permanentmagneten im Rotorpaket.

Das Anbringen erfolgt durch:
- Verdrehtes Anordnen eines ersten Paketblechs relativ zu einem zweiten Paketblech
   unter Bildung des von dem Permanentmagneten durchsetzbaren Schachts im Rotorpaket und
   unter Bildung einer der Rotorwelle zugewandte Oberfläche des Rotorpakets mit den angrenzenden Flächen der zentralen Ausnehmungen der Anzahl von Paketblechen und mit Unebenheiten quer zur Achse des Rotorpakets, die durch die Konturen der zentralen Ausnehmungen der Anzahl von Paketblechen entstehen,
   indem die Konturen der zentralen Ausnehmungen wenigstens eines ersten und zweiten Paketblechs der Anzahl von Paketblechen nichtkongruent
   zueinander angeordnet werden.

Nach Einbringen der Permanentmagneten in die entsprechenden Schächte ist vorgesehen:
- Spritzpressen von Spritzpressmasse axial und/oder radial um das Blechpaket.

Das Konzept des erfindungsgemässen Herstellungsverfahrens gewährleistet - neben der vorteilhaften Anbringung des Rotorpaktes an der Rotorwelle wie oben erläutert - trotz Verdrehen der Paketbleche zueinander die Bildung eines durchgehenden Schachts zur Aufnahme eines Permanentmagneten. Wenigstens zwei, vorzugsweise vier oder eine höhere geradzahlige Anzahl von Permanentmagneten ist vorgesehen, um wenigstens ein Polpaar am Rotorpaket auszubilden. Besonders vorteilhaft wird durch ein Assemblieren und Fixieren der Paketbleche relativ zueinander und zur Rotorwelle und sodann zusätzlich durch Spritzpressen von Spritzpressmasse axial und/oder radial um das Blechpaket eine besonders gute Fixierung des Rotorpakets an der Rotorwelle gewährleistet. Dies lässt sich besonders bevorzugt durch einen geeigneten Spritzpressvorgang erreichen.

Besonders bevorzugt lässt sich ein Permanentmagnet in einem durch die Aufnahmeöffnungen der Blechpakete gebildeten Schacht durch weitere vorteilhafte Maßnahmen besonders sicher und exakt positionieren. Vermeintlich gegenläufige Bedingungen von Masshaltigkeit und sichererer Fixierung eines Permanentmagneten lassen sich in einem Schacht durch die folgenden Massnahmen besonders vorteilhaft in Übereinstimmung bringen.

Weitere vorteilhafte Weiterbildungen der Erfindungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft wird das Rotorpaket mittels Spritzpressung und/oder Presspassung an der Rotorwelle angebracht. Es hat sich als besonders bevorzugt zur Bildung einer Spritzpressung und/oder Presspassung erwiesen, dass ein Außendurchmesser der Rotorwelle zwischen einem Innendurchmesser eines durch einen eingeschriebenen Kreis definierten inneren Zylinders und einem Aussendurchmesser eines durch einen umschriebenen Kreis definierten äußeren Zylinders liegt, wobei die genannten Zylinder der der Rotorwelle zugewandten Oberfläche des Rotorpakets zugeordnet sind. Besonders vorteilhaft kann auf diese Weise ein zwischen Rotorwelle und der Kontur der Ausnehmung gebildeter Spaltraum mit Spritzpressmasse befüllt werden. Zusätzlich oder alternativ kann auch und/oder eine an die Kontur angrenzende Pressfläche der Ausnehmung, insbesondere fließend verformt, an die Rotorwelle gepresst werden.

Bevorzugt ist der Spaltraum vom Maß einer oben genannte Rundheitsabweichung. Diese definiert sich wie erläutert bevorzugt derart, dass die Kontur der zentralen Ausnehmung mit einer Rundheitsabweichung zwischen einem eingeschriebenen Kreis derselben mit einem Innendurchmesser und einem umschriebenen Kreis derselben mit einem Außendurchmesser verläuft. Die Rundheitsabweichung ist bevorzugt grösser als 0.1 %, insbesondere grösser als 0.5% insbesondere kleiner als 5%, insbesondere kleiner als 2% eines Mittels aus Innendurchmesser und Außendurchmesser.

Im Rahmen einer besonders bevorzugten Weiterbildung ist vorgesehen, dass ein Paketblech zusätzlich eine Anzahl von Kodiermarken aufweist, mittels der das erste Paketblech relativ zu dem zweiten Paketblech verdreht festlegbar ist. Bevorzugt sind das erste und zweite Paketblech relativ zueinander unter Bildung jeweils eines von einem Permanentmagneten durchsetzten Schachts im Rotorpaket verdreht.

Unter einer Kodiermarkenanordnung ist grundsätzlich jede geeignete festlegende Markierung auf einem Paketblech - insbesondere als eine konstruktive Ausgestaltung des Paketbleches - zu verstehen, die zusätzlich zu den Merkmalen des Oberbegriffs des Anspruchs 1 vorgesehen ist und zudem ausgebildet ist, eine relative Anordnung von Paketblechen zueinander bei Verdrehen derselben in ausreichender Genauigkeit zu gewährleisten. Bevorzugt ist eine Kodiermarke, die sich gleichzeitig als Anschlagmittel eines Paketblechs -sei es an einem weiteren Paketblech oder an einem Herstellungsmittel- eignet. Beispielsweise kann durch Anschlag des Paketblechs mit der Kodiermarke an einem Herstellungsmittel, wie einem Spritzwerkzeug od.dgl., das erste Paketblech relativ zu dem zweiten Paketblech verdreht festgelegt werden und/oder das Rotorpaket am Herstellungsmittel festgelegt werden. Vorteilhaft wird das erste Paketblech und das zweite Paketblech mittels der Kodiermarke, insbesondere mit einer peripheren Kodierausnehmung, insbesondere als eine Randausnehmung, am Herstellungsmittel, beispielsweise einem Spritzwerkzeug, festgelegt. So kann das Einlegen des Rotorpakets in ein Spritzwerkzeug, d.h. das einzelne Einlegen eines Paketbleches, kodiert gemäß der Kodiermarkenanordnung erfolgen. Die Kodiermarkenanordnung kann auch zur Festlegung eines ersten Paketblechs an einem zweiten Paketblech genutzt werden. Die Kodiermarkenanordnung ermöglicht es, die Paketbleche relativ zueinander ausreichend festgelegt beim Herstellungsverfahren sicher zu assemblieren und in dieser Position mit der nötigen Fertigungstoleranz zu fixieren.

Aufgrund einer so kodiert vorgegebenen Assemblierstellung der Paketbleche lassen sich Rotorpaket und nachfolgende Herstellungsschritte des Rotors vereinfacht durchführen. Insbesondere können zusätzliche Justagen reduziert werden, da ein Assemblieren mit der Kodiermarke bereits ausreichend genau erfolgt. Insbesondere lassen sich eine Anzahl weiterer aufeinander abgestimmter Kodierungen an anderen Teilen des Rotors vorgeben, um eine relative Positionierung von Rotorpaket insbesondere zum Lüfter und/oder Stator zu vereinfachen. Ein Verdrehen des ersten und zweiten Paketblechs zueinander bildet zudem eine Basis, um eine Anbringung des Rotorpakets an der Rotorwelle in verbesserter Weise zu realisieren und dennoch eine Herstellung des Rotors zu vereinfachen.

Besonders bevorzugt ist beim Herstellungsverfahren vorgesehen, dass ein Paketblech eine Kodiermarkenanordnung gemäß einer mehrzähligen Drehsymmetrie der Permanentmagnetanordnung oder einer damit konformen mehrzähligen Drehsymmetrie aufweist. D. h. derart, dass das erste und zweite Paketblech relativ zueinander unter Bildung jeweils eines von einem Permanentmagneten durchsetzten Schachts im Rotorpaket verdreht wird. So kann ein Paketblech, das eine Anzahl von Kodiermarken aufweist zur Bildung des Rotorpakets in ein Spritzwerkzeug mittels der Anzahl von Kodiermarken kodiert eingelegt werden, wobei das erste Paketblech relativ zu dem zweiten Paketblech mit einer Anzahl von Aufnahmeöffnungen kongruent zueinander verdreht angeordnet werden kann, sodass die kongruent zueinander angeordneten Aufnahmeöffnungen den von dem Permanentmagneten durchsetzten Schacht im Rotorpaket bilden.

Als besonders bevorzugt hat sich erwiesen, dass die Anzahl von Aufnahmeöffnungen an ersten peripheren Winkelpositionen gemäß einer geradzähligen Drehsymmterie angeordnet sind. Bevorzugt ist die Anzahl von Kodiermarken an zweiten peripheren Winkelpositionen gemäß der geradzähligen Drehsymmterie oder einer niederen geradzähligen Drehsymmetrie angeordnet. Die zentrale von der Rotorwelle durchsetzte Ausnehmung hat bevorzugt eine Kontur, die eine ungeradzählige Drehsymmetrie aufweist. Indem gemäss dieser Weiterbildung der Erfindung das erste und zweite Paketblech relativ zueinander gemäß der geradzähligen Drehsymmetrie verdreht werden, wird eine besonders bevorzugte der Rotorwelle zugewandte Oberfläche des Rotorpakets gebildet.

Die verdrehsichere Anordnung der Paketbleche mittels der Kodiermarken gewährleistet, dass ein erstes Paketblech zum zweiten Paketblech beim Herstellungsprozess ausreichender Fertigungstoleranz angeordnet werden kann, ohne dass es einer Nachjustage oder eines nachfolgenden Auswuchtvorgangs für ein Rotorpaket bedürfte; jedenfalls aber ist ein solcher Aufwand verringert. Dennoch lässt die Kodiermarkenanordnung vorteilhaft eine beliebig wählbare verdrehte Anordnung des ersten Paketblechs zum zweiten Paketblech z, B. innerhalb einer vorbestimmten mehrzähligen Drehsymmetrie zu, sodass dies den Herstellungsschritt vereinfacht.

Unter einer mehrzähligen Drehsymmetrie ist eine Drehsymmetrie zu verstehen, die bei Drehen eines ersten Paketblechs zu einem zweiten Paketblech dennoch die Aufnahmeöffnungen für Permanentmagnete bzw. die Kodiermarkenanordnung im Wesentlichen kongruent zur Deckung bringt. Insbesondere ist darunter eine geradzählige Drehsymmetrie, also z.B. eine zweizählige, vierzählige, sechszählige, achtzählige usw. Drehsymmetrie zu Verstehen. Man spricht von einer n-zähligen Drehsymmetrie, wenn eine Drehung um 360°/n die Aufnahmeöffnungen bzw. die Kodiermarkenanordnung des Paketblechs auf sich selbst abbildet. Beispielsweise sind bei einer vierzähligen Drehsymmetrie die Aufnahmeöffnungen eines ersten Paketblech jeweils bei einer 90°-Drehung mit den Aufnahmeöffnungen für einen Permanentmagneten eines zweiten Paketblechs kongruent in Deckung zu bringen. Das vorgenannte Beispiel einer vierzähligen Drehsymmetrie betrifft beispielsweise die Anordnung von vier Permanentmagneten in vier Ausnehmungen eines Rotorpakets in einer 90°-Stellung zueinander. In dem Fall handelt es sich um die vierpolige Ausführung eines Rotors mit vier in einem Rotorpaket untergebrachten Permanentmagneten. Eine diese Weiterbildung beispielhaft erläuternde Ausführungsform ist anhand der Zeichnung beschrieben. Das Konzept der Erfindung ist jedoch nicht grundsätzlich beschränkt auf eine bestimmte Anzahl von Polen, sondern kann sich grundsätzlich auf beliebige mehrzählige Drehsymmetrien - beispielsweise auch ungeradzählige - erstrecken, auch wenn geradzählige Drehsymmetrien wie nachfolgend erläutert besonders bevorzugt sind. Eine Aufnahmeöffnung für einen Permanentmagneten kann grundsätzlich je nach Bedarf orientiert sein, beispielsweise entlang eines Radius des Paketblechs oder einer Sekante des Paketblechs angeordnet sein. Eine Ausnehmung für einen Permanentmagneten oder eine sonstige Aufnahmestruktur für ein polbildendes Element kann auch in einem von 90° oder 180° abweichenden Winkel zu einem Radius des Paketblechs, also schräg dazu, angeordnet sein. Letzteres berührt die Feststellung der Zähligkeit einer Drehsymmetrie der Aufnahmeöffnungen bzw. der Kodiermarkenanordnung nicht.

Besonders bevorzugt ist die wenigstens eine Kodiermarkenanordnung mit einer Anzahl von peripheren Kodierausnehmungen gebildet. Eine periphere Kodierausnehmung in einem Paketblech ist besonders geeignet, das Paketblech beispielsweise an einem Spritzwerkzeug festzulegen oder ein erstes Paketblech relativ zu einem zweiten Paketblech mittels der Kodierausnehmung relativ zueinander festzulegen.

Als besonders bevorzugt hat sich eine Anzahl von peripheren Kodierausnehmungen erwiesen, die mit einer Anzahl von Randausnehmungen gebildet ist. Die Fertigungstoleranzen berücksichtigende Anordnung des Paketblechs insbesondere in einem Spritzwerkzeug wird dadurch sicher gestellt, dass ein Steg des Spritzwerkzeugs in die Randausnehmung eingreift und so das Paketblech im Spritzwerkzeug fixiert. Durch Stapeln der Anzahl von Paketblechen übereinander wird so ein Rotorpaket mit einer durch die Randausnehmungen gebildeten Nut im Mantelbereich des Rotorpakets erzeugt, wobei die Nut in einem Steg des Spritzwerkzeugs gehalten ist. Grundsätzlich lässt sich die Anordnung von Nut und Steg auf Rotorpaket und Spritzwerkzeug auch umkehren. Dies ist möglich, solange ein Steg am Rotorpaket nicht störend wirkt oder kompensiert werden kann. Gemäß dieser bevorzugten Weiterbildung können mittels der Kodiermarkenanordnung die Paketbleche bereits im Rahmen der Fertigungstoleranz gestapelt werden. Einer Nachjustage oder eines Auswuchtvorgangs bedarf es nicht; jedenfalls sind solche separaten Korrekturschritte weitgehend reduziert.

Des Weiteren ist bevorzugt eine Anzahl von peripheren, randbeabstandeten Paketierpunkten, insbesondere Löcher od.dgl. zu bilden. Diese können, mit SpritzpressMasse gefüllt, eine die Fertigungstoleranz einhaltenden relative Festlegung eines ersten Paketblechs zu einem zweiten Paketblech unterstützen, d. h. eine verdrehsichere Anordnung eines ersten Paketblechs zu einem zweiten Paketblech im Rahmen einer vorgegebenen Fertigungstoleranz. Bevorzugt ist ein Paketierpunkt radial zwischen einer von einem Permanentmagneten durchsetzten Aufnahmeöffnung und der zentralen von der Rotorwelle durchsetzten Ausnehmung gebildet. Diese Anordnung der Paketierpunkte hat sich als besonders geeignet zur Ausbildung eines stabilen Rotorpakets erwiesen.

Besonders bevorzugt weist ein Rotorpaket - als Rand-Paketblech - ein Anfangspaketblech auf, das - wie die übrigen mehrzähligen Paketbleche auch - eine zentrale im Anfangspaketblech angeordnete von der Rotorwelle durchsetzte Ausnehmung aufweist. Darüberhinaus ist wenigstens eine peripher im Anfangspaketblech angeordnete von einem Permanentmagneten durchsetzte rechteckige Aufnahmeöffnung vorgesehen. Die im Wesentlichen rechteckige Aufnahmeöffnung umgibt einen im Wesentlichen rechteckigen Permanentmagneten praktisch passgenau. Vorteilhaft ist es möglich, unter Belassen eines umlaufenden Spiels in der Passung einen Füllspalt um einen Permanentmagneten darzustellen, um diesen in der im wesentlichen rechteckigen Aufnahmeöffnung des Anfangspaketbleches sicher mit Spritzpressmasse zu fixieren. Zusätzlich oder alternativ kann ein die Aufnahmeöffnung teilender Steg und/oder eine seitliche Phase vorgesehen sein, um den Permanentmagneten axial zu fixieren.

Bevorzugt ist ein mehrzähliges Paketblech der Anzahl von Paketblechen mit einer peripheren, jeweils von einem Permanentmagneten durchsetzten im Wesentlichen rechteckigen Aufnahmeöffnung versehen. Vorzugsweise weist die im Wesentlichen rechteckige Aufnahmeöffnung eine seitliche Ausbuchtung zur Aufnahme von Spritzpressmasse auf. Zusätzlich oder alternativ kann die im Wesentlichen rechteckige Aufnahmeöffnung auch eine seiltiche Freischneidung haben, die sich auch zur Aufnahme von Spritzpressmasse eignet. Ein Spritzpressvorgang kann so vorteilhaft genutzt werden, einen Permanentmagneten beim weit überwiegenden Teil des Rotorpakets mit ausreichender Spritzpressmasse seitlich zu fixieren.

Vorteilhaft weist das Rotorpaket - als Rand-Paketblech - ein Endpaketblech auf, das - wie die übrigen mehrzähligen Paketbleche - eine zentrale im Endpaketblech angeordnete von der Rotorwelle durchsetzte Ausnehmung aufweist. Darüberhinaus ist beim Endpaketblech wenigstens eine peripher im Endpaketblech angeordnete einem Permanentmagneten zugeordnete - aber vorteilhaft nicht von diesem durchsetzte - im Wesentlichen rechteckige Öffnung vorgesehen. Diese hat vorzugsweise eine seitliche Phase und/oder einen die Öffnung teilenden Steg auf. Die seitliche Phase und/oder der Steg können einen Permanentmagneten in axialer Richtung halten. Insgesamt sichert die Kombination eines Anfangspaketblechs mit einem Endpaketblech und die wenigstens teilweise verdrehten mehrzähligen Paketbleche im Rotorpaket eine seitliche und axiale Fixierung eines Permanentmagneten.

Im Rahmen einer besonders bevorzugten Weiterbildung weist die Rotorwelle eine Lager-und/oder Lüfteraufnahme, insbesondere Kugellageraufnahme, auf. Diese hat, vorzugsweise im Bereich der Lageraufnahme ein Keilwellenprofil. Diese hat, vorzugsweise im Bereich der Lüfteraufnahme, eine Kodierung, mittels der ein Lüfterrad relativ zur Rotorwelle verdrehsicher anzuordnen ist. Insbesondere ist die Kodierung konform mit der mehrzähligen Drehsymmetrie, so dass sich insbesondere ein Lüfterrad relativ zu einer von einem Permanentmagneten durchsetzten Aufnahmeöffnung verdrehsicher anordnen lässt. Beispielsweise kann die Kodierung der Lager- und/oder Lüfteraufnahme eine Anzahl von Stegen aufweisen, die gleich der Anzahl von Permanentmagneten ist. Beispielsweise kann die Kodierung der Lager- und/oder Lüfteraufnahme wenigstens eine Flachseite aufweisen, die parallel zu einer Ausrichtung eines Permanentmagneten ist.

Insbesondere hat es sich als vorteilhaft erwiesen, dass ein an der Rotorwelle angebrachtes Lüfterrad einen Lüftermagnetring mit Polen und/oder Lüfterschaufeln aufweist, die gemäß der mehrzähligen Drehsymmetrie angeordnet sind. Die kodierte Lager- und/oder Lüfteraufnahme reduziert den Aufwand einer Nachjustage für den Lüftermagnetring um diesen relativ zur Anordnung der Permanentmagnete im Rotorpaket exakt zu positionieren, da alle Pole gemäß der Kodierung vorzugsweise bereits an gleichen Winkelpositionen angeordnet sind. Besonders einfach lässt sich diese Weiterbildung realisieren, indem der Lüftermagnetring und/oder die Permanentmagnete erst nach abgeschlossener Spritzpressung magnetisiert werden. Die exakte Anordnung relativ zueinander aufgrund der Kodiermarkenanordnung und/oder der Kodierung für die Lüfteraufnahme wird so nicht unnötig durch die vorzeitige Magnetisierung eines Permanentmagneten bzw. des Lüftermagnetrings gestört.

Vorzugsweise weist das Lüfterrad auch Lüfterschaufeln auf, die mittels der Kodierung der Lüfteraufnahme an peripheren Winkelposition der Permanentmagnete oder sonstigen polbildenden Elementen angeordnet sind. So wird ein besonders vorteilhaft außen gekühlter - insbesondere permanenterregter, BLDC oder BLAC - Elektromotor realisierbar.

Bevorzugt wird hinsichtlich des Elektromotors der Rotor in eine magnetisch gekoppelte Anordnung zum Stator gebracht, wobei der Stator eine Anzahl von Statorpolen gemäß der mehrzähligen Drehsymmetrie aufweist. Die Statorpole sind im Betrieb entsprechend drehend wechselnden Rotorpolen zugeordnet. Bisher hat sich die Justage der Statorpole relativ zu den Rotorpolen als vergleichsweise aufwändig erwiesen. Diese erfolgt regelmäßig mittels eines Hall-Sensors, der am Stator angebracht ist. Gemäß eine besonders bevorzugten Weiterbildung ist vorgesehen, dass eine Stator-Kodierung wenigstens einen Hall-Sensor relativ zu der Anzahl von Statorpolen festlegt. Insbesondere kann ein Hall-Sensor durch die Stator-Kodierung exakt zwischen zwei Statorpolen festgelegt sein. Hier entfällt vorteilhaft eine Nachjustage. Im Rahmen einer besonders bevorzugten Abwandlung hat es sich als vorteilhaft erwiesen, dass ein Hall-Sensor auf einer Leiterplatte angeordnet ist, die über eine Plattenkodierung relativ zu einer Trägerplatte festgelegt ist. Die Trägerplatte ist des Weiteren über die vorgenannte Statorkodierung relativ zu der Anzahl von Statorpolen festgelegt. Die bevorzugte Ausführung einer solchen Weiterbildung ist anhand der Zeichnung erläutert.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: eine Seitenansicht eines Rotors mit einer Rotorwelle und einem daran angebrachten Rotorpaket, Kugellager und Lüfterrad gemäß einer bevorzugten Ausführungsform der Erfindung;
- Fig. 2: eine teilweise geschnittene kopfseitige Ansicht des Rotors der Fig. 1 unter Darstellung der Permanentmagnete des Rotorpakets sowie eines Paketblechs in Anordnung relativ zu einem Magnetring des Lüfterrads;
- Fig. 3: eine perspektivische Ansicht des teilassemblierten Rotors der Fig. 1 ohne Lüfterrad und Lager, jedoch unter Darstellung einer ersten Variante einer kodierten Lager- und Lüfteraufnahme;
- Fig. 4: eine Schnittdarstellung der Fig. 3 entlang einer Achse A der Rotorwelle und des Rotorpakets unter prinzipieller Darstellung der mehrzähligen Paketbleche sowie einem in Fig. 12 vergrößert dargestellten Details X zur Verdeutlichung des Spaltraums zwischen Innenmantelseite des Rotorpakets und Außenmantelseite der Rotorwelle;
- Fig. 5: eine prinzipielle Einzeldarstellung eines mehrzähligen Paketblechs aus einer Schnittansicht der Fig. 4;
- Fig. 6: eine vergrößerte Darstellung des Paketblechs der Fig. 5 mit einer von der Rotorwelle zu durchsetzenden zentralen Ausnehmung und - vorliegend gemäß einer vierzähligen Drehsymmetrie - vier peripheren jeweils von einem Permanentmagneten zu durchsetzenden Aufnahmeöffnungen sowie vier Paketierpunkten und vier Kodiermarken;
- Fig. 7: eine vergrößerte Darstellung eines weiteren Paketblechs für eine alternative Ausführungsform gemäß der Erfindung, bei welcher eine Aufnahmestruktur in Form einer Anzahl von Ankerzähnen zur Aufnahme von jeweils einer Spulenwicklung vorgesehen ist - dies gemäß einer vielzähligen Drehsymmetrie in Kombination mit einer zentralen Ausnehmung mit einer Kontur gemäß einer dreizähligen Drehsymmetrie;
- Fig. 8: die Kontur der zentralen Ausnehmung beim Paketblech der Fig. 7 in einer Prinzipdarstellung mit einem eingeschriebenen Kreis und einem umschriebenen Kreis zur beispielhaften Verdeutlichung einer Rundheitsabweichung für eine Kontur der zentralen Ausnehmung;
- Fig. 9A: ein Anfangsblech für ein in Fig. 3 und Fig. 4 dargestelltes Rotorpaket;
- Fig. 9B: ein mehrzähliges Paketblech der Fig. 5;
- Fig. 9C: ein Endpaketblech für ein Rotorpaket der Fig. 3 und Fig. 4;
- Fig. 10: eine perspektivische Darstellung allein des Rotorpakets der Fig. 3 und Fig. 4 ohne Rotorwelle zur Verdeutlichung der unebenen Oberfläche auf einer Innenmantelseite des Rotorpakets sowie die Bezeichnung des in Fig. 11 vergrößert dargestellten Details Y;
- Fig. 11: das Detail Y der Fig. 10;
- Fig. 12: das Detail X der Fig. 4;
- Fig. 13: eine Schnittansicht des mit Sprizpressmasse versehenen Rotors der Fig. 3 unter Kennzeichnung des Details Z;
- Fig. 14: das Detail Z der Fig. 13;
- Fig. 15: eine Seitenansicht der Rotorwelle der Fig. 13 ohne das Rotorpaket, jedoch mit der Spritzpressmasse, wie sie sich im komplexen Spaltraum zwischen Innenmantelseite des Rotorpakets und Außenmantelseite des Rotors bei einem Spritzpressvorgangs ansammelt und verfestigt;
- Fig. 16: eine perspektivische Ansicht eines fertig assemblierten Rotors mit vollständig umspritzten Rotorpaket sowie -vorliegend ohne Lüfterrad und Kugellager- mit einer zweiten Variante einer Kodierung der Lager- und/oder Lüfterradaufnahme;
- Fig. 17: eine Schnittansicht eines fertig assemblierten BLDC-Elektromotors gemäß einer besonders bevorzugten Ausführungsform.

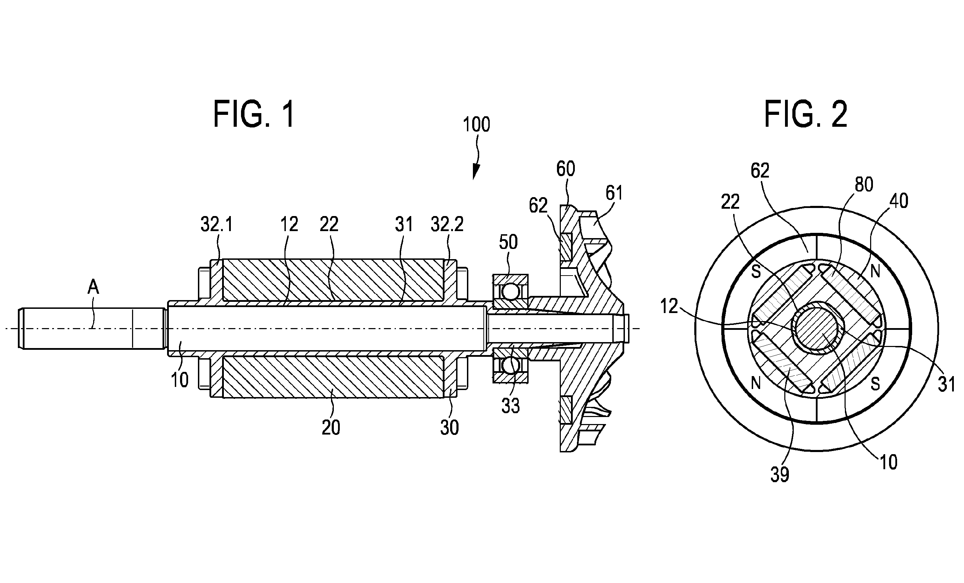

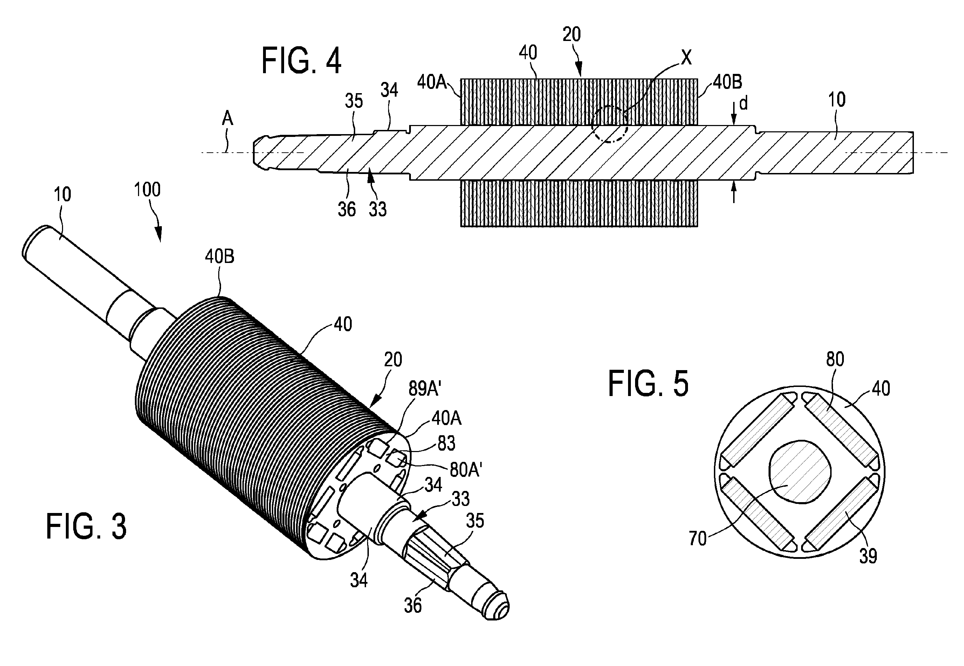

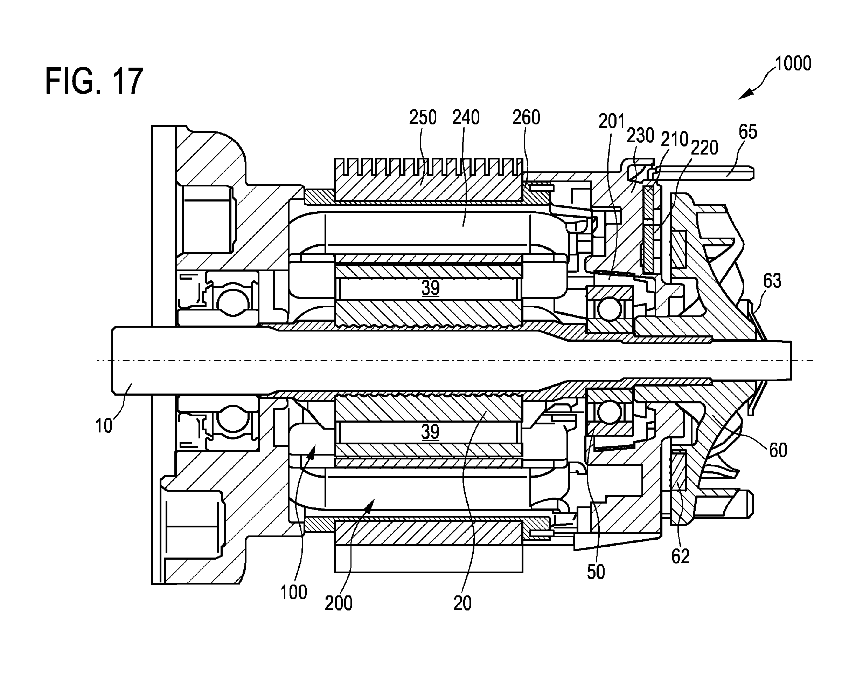

Fig. 1 zeigt einen vollständig assemblierten Rotor 100 für einen in Fig. 17 näher dargestellten permanent erregten Elektromotor 1000, der vorliegend als ein BLDC-Elektromotor mit einer Anordnung aus Rotor 100 und Stator 200 gebildet ist. Dazu ist - wie aus Fig. 17 ersichtlich - der Rotor 100 drehbar und magnetisch gekoppelt in einer Ausnehmung des Stators 200 angeordnet. Fig. 1 zeigt den Rotor 100 mit einer Rotorwelle 10 sowie mit einem an der Rotorwelle 10 angebrachten Rotorpaket 20, das aus einer Anzahl von in Fig. 2 und Fig. 5,

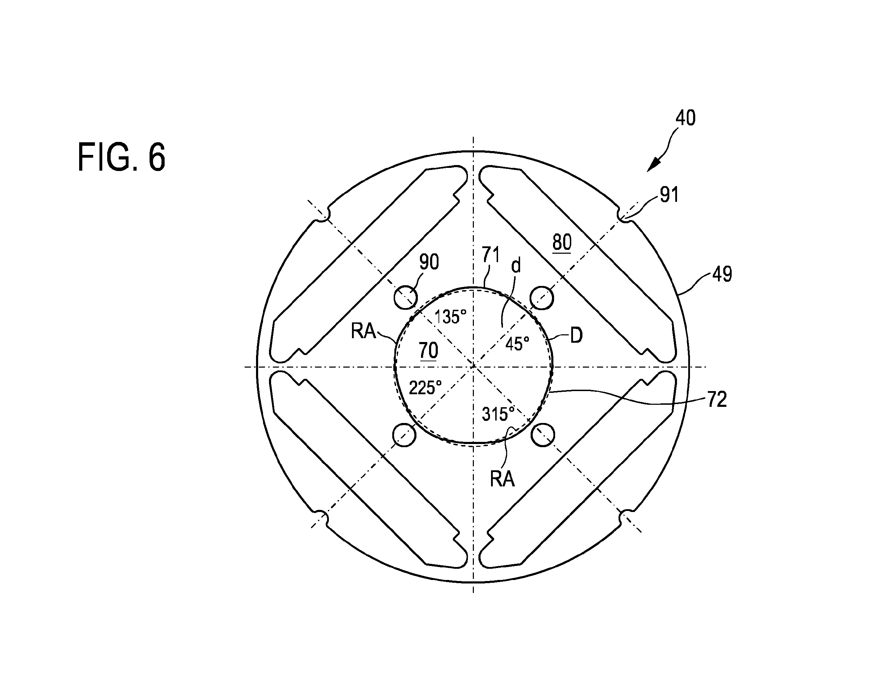

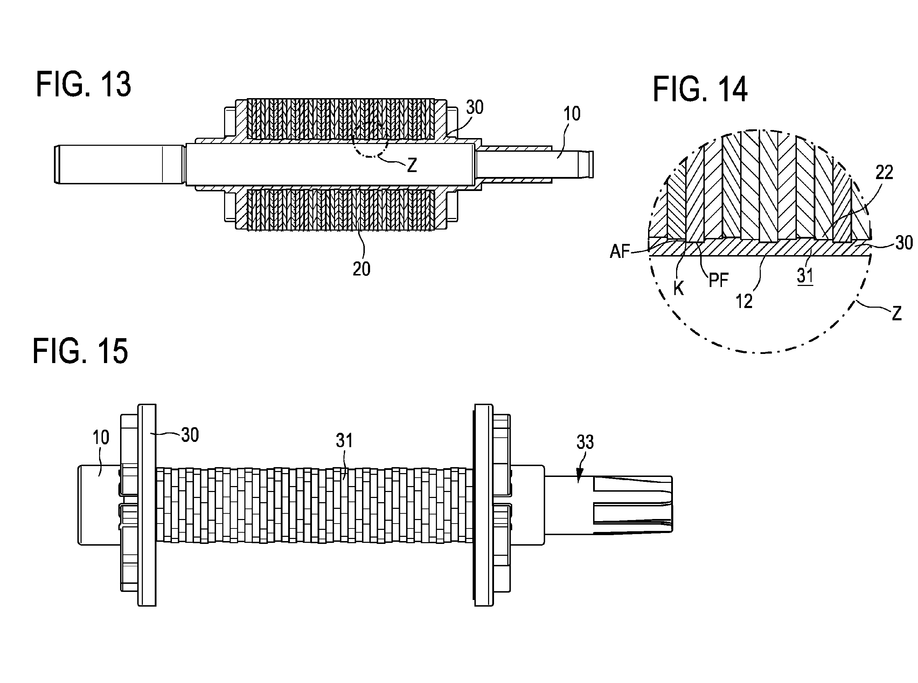

Fig. 6 weiter ersichtlichen Paketblechen 40 gebildet ist. Die Paketbleche 40 sind vorliegend entlang einer Achse A zur Bildung des Rotorpakets 20 gestapelt. Die in Fig.2 gezeigten in vier peripheren Winkelpositionen angeordneten Ausnehmungen 80 bilden (als Aufnahmestruktur) in der gestapelten Anordnung der Paketbleche 40 einen Schacht (als Aufnahme), der jeweils einen Permanentmagneten 39 (als polbildendes Element) aufnimmt. Jeder der Permanentmagnete 39 bildet einen Pol des Rotorpakets 40. Das Rotorpaket 20 ist mittels eines Spritzpressverfahrens unter Nutzung einer Spritzpressmasse 30 an der Rotorwelle 10 fixiert. Die Spritzpressmasse 30 umgibt dabei das Rotorpaket 20 sowohl entlang eines sich entlang einer axialen Richtung erstreckenden Spaltraums 31 als auch radial entlang einer axialen Deckkappe 32.1, 32.2 - eine davon ist auch in Fig.14 gezeigt. Der Spaltraum 31 ist zwischen einer Innenmantelseite 22 des Rotorpakets 20 und einer Außenmantelseite 12 der Rotorwelle 10 gebildet. An einem aus dem Rotorpaket 20 herausstehenden Ende der Rotorwelle 10 ist ein Lager 50, hier in Form eines Kugellagers, zur drehenden Lagerung der Rotorwelle 10 mit Rotorpaket 20 im Stator 200 vorgesehen. Die Lagerung erfolgt an einem aus Fig. 17 ersichtlichen Gehäuseabschnitt 201. Am gleichen herausstehenden Ende ist ein Lüfterrad 60 an der Rotorwelle 10 fest angebracht und mit einer in Fig. 17 gezeigten Krallscheibe 63 fixiert. Das Lüfterrad 60 als auch das Lager 50 sind dabei an einer aus Spritzpressmasse 30 gebildeten Lager- und Lüfteraufnahme 33 angebracht, die sich hier zum einen Ende der Rotorwelle 10 hin verjüngt. Das Lüfterrad 60 weist luftansaugseitig Lüfterschaufeln 61 auf, mittels denen in einem aus Fig. 17 ersichtlichen Lüftergehäuse 65 Luft angesaugt und der Anordnung aus Rotor 100 und Stator 200 in axialer Richtung zugeführt werden kann. Dadurch wird eine etwaige stehende heisse Luft an einer Elektromotoraussenseite beseitigt. Die grundsätzlich luftumwälzend wirkenden Lüfterschaufeln 61 können je nach Bedarf neutral, vorwärts oder rückwärts gekrümmt ausgebildet werden. Insofern handelt es sich bei dem in Fig. 17 und der weiteren Zeichnung im einzelnen dargestellten Elektromotor 1000 um einen sogenannten außen gekühlten BLDC-Elektromotor.

Auf einer den Lüfterschaufeln 61 gegenüberliegenden Seite des Lüfterrads 60 ist ein Magnetring 62 eingearbeitet, dessen vierpolige Ausführung mit gegenüberliegenden Nord-(N) und Südpolen (S) aus der Kopfansicht der Fig. 2 ersichtlich ist. Vorliegend wird durch Anbringen der Spritzpressmasse 30 mittels eines Spritzpressverfahrens nicht nur das Rotorpaket 20 an der Rotorwelle 10 fixiert, sondern darüberhinaus die Lager- und Lüfteraufnahme 33 am auslaufenden Ende der Rotorwelle 10 angeformt. Wie nachfolgend im Einzelnen erläutert, kann unter Nutzung einer Kodierung auf der Lager- und Lüfteraufnahme 33 das Lager 50 und vor allem das Lüfterrad 60 mit dem Magnetring 62 relativ zum Rotorpaket 20 exakt drehpositioniert auf der Rotorwelle 10 angebracht werden. Die vier Pole des Magnetrings 62 des Lüfterrades 60 sind dadurch an gleichen Winkelpositionen wie die Pole des Rotorpakets 20 angeordnet, ohne dass es einer besonderen Nachjustage oder Auswuchtung dazu bedürfte.

Dazu zeigt Fig. 3 im Prinzip den in Fig. 1 gezeigten Rotor 100, allerdings ohne Lager 50 und ohne Lüfterrad 60, so dass die Lager- und Lüfteraufnahme 33 näher ersichtlich ist. Diese weist einen Lagersitz 34 und einen Lüftersitz 35 auf. Während der Lagersitz 34 mit einem glatten Keilwellenprofil ausgeführt ist, ist der Lüftersitz 35 mit einer Kodierung vorliegend in Form einer Anzahl von vier Stegen 36 gebildet. Aufgrund der Kodierung kann das Lüfterrad 60 nur in einer festgelegten Drehpositionen auf die Rotorwelle 10 gesetzt werden, bei welcher die vier Pole N, S des Magnetrings 62 des Lüfterrades 60 an gleichen Winkelpositionen wie die Pole Permantentmagnete 39 des Rotorpakets 20 angeordnet sind. Vorliegend ist die Kodierung mit vier Stegen 36 ausgeführt, wobei jeder Steg 36 eine Winkelposition einnimmt, die mit einer Winkelposition eines in Fig.2 gezeigten Permanentmagneten 39 des Rotorpakets 20 übereinstimmt.

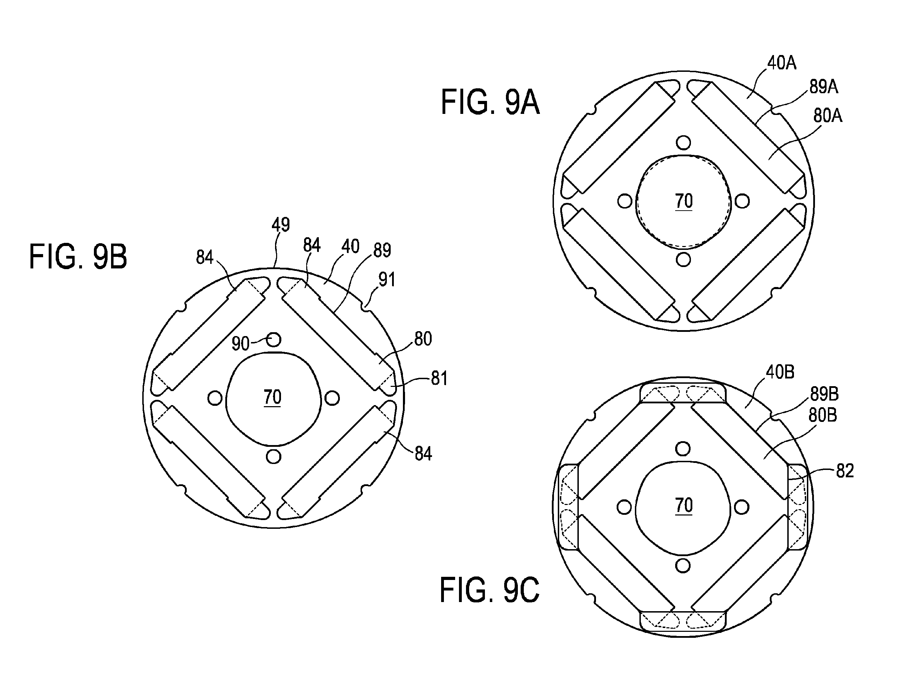

Fig. 3 zeigt das Rotorpaket 20, unter Darstellung der einzelnen Paketbleche 40, die auch in der Schnittansicht der Fig. 4 ersichtlich sind. Zwischen einem Anfangspaketblech 40A und einem Endpaketblech 40B - als Rand-Paketbleche - sind so bezeichnete mehrzählige Paketbleche 40 wie in Fig. 2 und Fig.5 gezeigt angeordnet. Die Paketbleche 40, 40A und 40B werden durch Stanzen des sogenannten Rotorblechschnitts erzeugt. Im Stanzwerkzeug werden gesteuert einzelne Schnittstempel genutzt, um die unterschiedlichen Paketbleche 40, 40A und 40B zu erzeugen, die anhand Fig. 9A, Fig. 9B und Fig. 9C im Detail erläutert sind.

Aus der Darstellung der Fig. 5 ist zunächst die Ausbildung des mehrzähligen Paketblechs 40 mit einer zentralen, von der Rotorwelle 10 durchsetzten Ausnehmung 70 und einer Anzahl von peripheren, jeweils von einem Permanentmagneten 39 durchsetzten Aufnahmeöffnungen 80 ersichtlich.

Die zentrale Ausnehmung 70 hat eine anhand Fig.6 erläuterte von der Kreiskontur 72 abweichende mit wellenförmigen Rundheitsabweichungen RA versehene Kontur 71 eines Pentagons. Die wellenförmigen Rundheitsabweichungen RA sind bevorzugt geeignet, unter Bildung des Spaltraumes 31, Spritzpressmasse aufzunehmen und darüberhinaus eine besonders gute rotatorische Verdrehsicherung als auch axiale Sicherung des Rotorpakets 20 an der Rotorwelle 10 zu erreichen. Die Aufnahmeöffnungen 80 sind vorliegend gemäß einer vierzähligen Drehsymmetrie peripher zur zentralen Ausnehmung 70 angeordnet und dabei jeweils entlang einer Sekante des ansonsten zylindrischen Paketblechs 40 orientiert. Jede der peripheren Aufnahmeöffnungen 80 nimmt einen Permanentmagneten 39 auf.

Insofern sind -in der Perspektive der Fig. 6 vergrössert dargestellt- die Aufnahmeöffnungen 80 an Winkelpositionen bei 45°, 135°, 225° und 315° gemäß der vierzähligen Drehsymmetrie angeordnet. An den gleichen Winkelpositionen sind die Permanentmagnete 39 in den durch die gestapelten Aufnahmeöffnungen formierten Schächten zur Bildung einer vierzählig drehsymmetrischen Vier-Polanordnung aufgenommen. Diese Drehsymmetrie entspricht auch derjenigen der Polanordnung N-S-N-S am Magnetring 62 des Lüfterrads 60 wie sie in Fig. 2 gezeigt ist.

Die vorerwähnte Kodierung durch die vier Stege 36 am Lüftersitz 35 der Lager- und Lüfteraufnahme 33 stellt sicher, dass das Lüfterrad 60 und damit der Magnetring 62 und seine Polorientierung exakt mit der durch die Permanentmagnete 39 gebildeten Polanordnung des Rotorpakets 20 übereinstimmt. Entsprechend ist in Fig. 2 jeweils eine Polmitte des Magnetrings 62 bei den Winkelpositionen 45°, 135°, 225° und 315° zu finden.

Im Herstellungsprozess kann das Lager 50 und anschließend das Lüfterrad 60 auf die mit Kodierung versehene Lager- und Lüfteraufnahme 33 geschoben werden, wobei durch die Kodierung sichergestellt ist, dass - unabhängig von der Wahl einer der durch die vier Stege 36 festgelegten Drehpositionen - die Polorientierung des Magnetrings 62 des Lüfterrads 60 mit der Polorientierung des Rotorpakets 20 übereinstimmt.

Bei der Montage des außen gekühlten Elektromotors 1000 wird das Lüfterrad 60 am herausstehenden Rotorwellenende auf den an der Lager- und Lüfteraufnahme 33 angebrachten kodierten Lüftersitz 35 aufgepresst und schließlich mit einer in Fig. 17 gezeigten Krallscheibe 63 axial gesichert. Das Lüfterrad 60 selbst wird mit dem kunststoffgebundenen vierpoligen Magnetring 62 mittels einem zweikomponentigen Spritzpressverfahren hergestellt und im Spritzwerkzeug magnetisiert. D.h. die vier aus Fig. 2 ersichtlichen Pole N-S-N-S des Magnetrings 62 werden exakt ― ohne Winkelfehler ― zu der Kodierung des Lüftersitz 35 magnetisiert. Erst nach dem Magnetisieren wird der Lüfter aus dem Spritzwerkzeug ausgeworfen. Damit ist gewährleistet. Dass die zuvor erläuterten Pole N-S-N-S des Magnetrings 62 des Lüfterrades 60 mittels dem kodierten Lüftersitz 33, exakt zu den Permanentmagneten 39 im Rotorpaket 20 ausgerichtet sind.

Anhand der folgenden Fig. 6 bis Fig. 15 wird erläutert, dass die exakte Vorgabe einer Polorientierung am Rotorpaket 20 aufgrund einer verdrehsicheren Anordnung aller Paketbleche des Rotorpakets 20 zueinander sichergestellt ist.

Dazu zeigt zunächst Fig. 6 das Paketblech 40 der Fig. 5 in vergrößerter Darstellung. Das Paketblech 40 hat einen im Wesentlichen glatt zylindrischen Querschnitt. In diesen ist durch Ausstanzungen die bereits erläuterte zentrale, von der Rotorwelle 10 durchsetzte Ausnehmung 70 sowie die vier peripheren, jeweils von einem Permanentmagneten 39 zu durchsetzenden Aufnahmeöffnungen 80 eingebracht. Außerdem weist jedes Paketblech 40 vier Paketierpunkte 90 auf. Die Paketbleche 40 werden so zu einem Rotorpaket 20 geschichtet. Sowohl die Aufnahmeöffnungen 80 als auch die Paketierpunkte 90 sind gemäß der vierzähligen Drehsymmetrie auf einer Winkelposition bei 45°, 135°, 225° und 315° angeordnet. Eine Drehung des Paketblechs 40 um 90° ist bezüglich der Drehposition einer Aufnahmeöffnung 80 und eines Paketierpunktes 90 und einer Randausnehmung 91 invariant. Mit anderen Worten kommt ein erstes Paketblech, wie es in Fig. 6 gezeigt ist, mit einem zweiten Paketblech, wie es in Fig. 6 gezeigt ist, hinsichtlich der Aufnahmeöffnungen 80 als auch der Paketierpunkte 90 deckungsgleich aufeinander, wenn ein relativer Drehwinkel ein Vielfaches von 90° ist. Dies ist Ausdruck der vorliegend vierzähligen drehsymmetrischen Anordnung der Permanentmagnete 39 im Rotorpaket 20 bzw. der Aufnahmeöffnungen 80 und der Paketierpunkte 90.

Gleiches gilt wie genannt auch für die Randausnehmungen 91 des Paketblechs 40. Auch die an einem äußersten Rand 49 des Paketblechs 40 ausgenommenen Randausnehmungen 91 sind um 90° versetzt gemäß der vierzähligen Drehsymmetrie angeordnet. Auch mit den Randausnehmungen 91 wird ein um 90° verdrehtes Paketblech 40 deckungsgleich auf einem nicht verdrehten Paketblech 40 zu liegen kommen, d.h. kongruent hinsichtlich der Paketierpunkte 90 der Aufnahmeöffnungen 80 und der Randausnehmungen 91 sein.

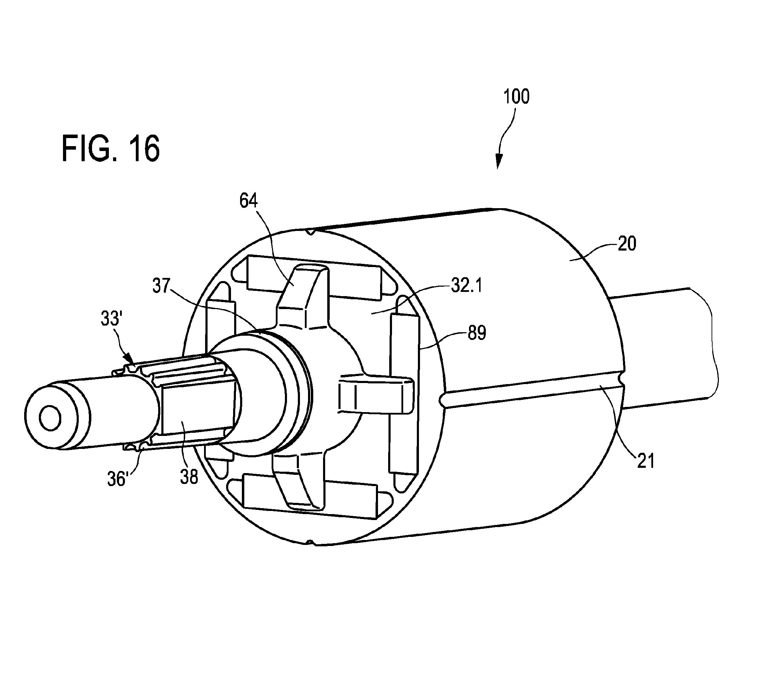

Mit Hinweis auf Fig. 16 bilden die Randausnehmungen 91 eine Randnut 21 des Rotorpakets 20. Bei der Herstellung des Rotorpakets 20 wird jedes der Paketbleche 40 mit einer Randausnehmung 91 in Eingriff mit einem hier nicht gezeigten Steg eines Spritzwerkszeugs gebracht, so dass jedes der Paketbleche 40 im Rotorpaket 20 unter Erhalt der vierzähligen Drehsymmetrie verdrehsicher und kodiert angeordnet ist. Dies ist vorliegend eine besonders vorteilhafte Vorraussetzung für die Wirksamkeit der weiteren hier beschriebenen Kodierungen der Lager- und Lüfteraufnahme 33 sowie des Stators. Damit lassen sich Pole am Rotor 100, Pole des Magnetrings 62 am Lüfterrad 60 und die Pole am Stator 200 relativ zueinander bereits in der Fertigung exakt anordnen.

Ähnlich wie die Randausnehmungen 91, die vorerwähnte Nut 21 am Außenmantel des Rotorpakets 20 bilden, bilden die Aufnahmeöffnungen 80 einen sich entlang des Rotorpakets 20 erstreckenden axialen Schacht zur Aufnahme jeweils eines Permanentmagneten 39 auch unter vorliegend vorgesehener 90°-Drehung benachbarter Paketbleche 40 zueinander. Anders ausgedrückt dienen die vorerwähnten Stege im Spritzwerkzeug als Justiermittel für die jeweils zueinander verdrehten Paketbleche 40 unter Eingriff in die Randausnehmungen 91. Insofern bilden die Randausnehmungen 91 eine Kodiermarkenanordnung gemäß der vierzähligen Drehsymmetrie mittels der ein erstes und ein zweites Paketblech 40 verdrehsicher relativ zueinander anzuordnen ist. Die Kodiermarkenanordnung in Form der Randausnehmungen 91 garantiert letztlich eine maßgenaue Ausbildung der Schächte zur Aufnahme eines Permanentmagneten 39 in den Aufnahmeöffnungen 80.

Im Ergebnis wird eine Kodiermarkenanordnung mittels der Randausnehmungen 91 derart gebildet, dass bereits die Paketbleche 40 im Rotorpaket 20 relativ zueinander im Rahmen der Fertigungsgenauigkeit verdreht zueinander angeordnet sind. Die Permanentmagnete 39 können dennoch bereits positionsgenau in einen durch die Aufnahmeöffnungen 80 gebildeten Schacht eingebracht werden, ohne dass es einer Nachjustage oder einer Auswuchtung des Rotors 100 bedürfte.

Ein in Fig. 9A gezeigtes Anfangspaketblech 40A ist grundsätzlich ähnlich wie das zum Vergleich in Fig. 9B gezeigte mehrzählige Paketblech 40 ausgeführt. Die Aufnahmeöffnung 80A des Anfangspaketblechs ist jedoch mit einem strikt rechteckigen Rand 89A, 89B, d.h. ohne die in Fig. 9B für die Aufnahmeöffnungen 80 vorgesehenen Ausbuchtungen 81 ausgeführt. Vielmehr sind die Aufnahmeöffnungen 80A des Anfangspaketblechs unter belassen eines Füllspaltes zwischen Rand 89A und Permanentmagnet 39 passgenau auf die Abmaße eines Permanentmagneten 39 ausgelegt. Ein Permanentmagnet 39 wird also von der Aufnahmeöffnung 80A des Anfangspaketblechs 40A passgenau gefasst. Der zwischen dem Rand 89A der Aufnahmeöffnung 80A und dem Permanentmagnet 39 verbleibende Füllspalt wird durch Spritzpressmasse 30 gefüllt, sodass der Permanentmagnet 39 umso besser in der Aufnahmeöffnung 80A gehalten ist. Aufgrund eines etwas grösseren Umfangs eines Randes 89A der Aufnahmeöffnung 80A (im Vergleich zum Rand 89 der Aufnahmeöffnung 80) wird eine axiale Abdichtung der Permanentmagnete 39 im Spritzwerkzeug wesentlich erleichtert und im übrigen eine geringere Flächenpressung erreicht, was den gesamten Spritzpressvorgang sicherer macht.

Die Aufnahmeöffnung 80A ist in einer Variante 80A' in Fig. 3 dargestellt und hat dort einen mittigen Steg 83. Der Steg 83 dient dazu, einen Permanentmagneten 39 axial zu positionieren und abzustützen. Der mittige Steg 83 dient außerdem dazu, einen aus Fig. 16 ersichtlichen Spritzpressmassenkopf 37 an seinen Ausläufern 64 abzustützen. Die Stege 83 unterstützen insofern die Ausläufer 64 des Spritzpressmassenkopfs 37 an einer axialen Deckkappe 32.1. Ein solcher Steg kann auch an einem End-Paketblech 80B vorgesehen sein und stört eine Magnetfeldführung grundsätzlich nicht.

Bezugnehmend auf Fig. 9B ist eine weitere seitliche Absicherung des Permanentmagneten 39 in dem durch die Aufnahmeöffnungen 80 gebildeten Schacht der mehrzähligen Paketbleche 40 ersichtlich. Diese wird durch die in den Ausbuchtungen 81 am Rand 89 der Aufnahmeöffnungen 80 der mehrzähligen Paketbleche 40 vorhandene Spritzpressmasse 30 erreicht. Auch die im Stanzvorgang gebildeten Freischnitte 84 am Rand 89 werden mit Spritzmasse gefüllt und fixieren einen Permanentmagneten 39 zusätzlich an seinen Ecken. Die Aufnahmeöffnungen 80 sind ansonsten mit ihrer im wesentlichen rechteckigen Form eines Randes 89 passgenau und eng anliegend am Permanentmagneten 39 gebildet, sodass dieser bereits beim Einbringen in den Schacht exakt positioniert ist.

Durch die Ausbildung des mehrzähligen Paketblechs 40 in Kombination mit dem Anfangspaketblech 40A wird nicht nur eine besonders massgenaue Ausführung eines Schachts zur Aufnahme eines Permanentmagneten 39 erreicht, sondern auch eine besonders gute seitliche Absicherung eines Permanentmagneten 39 durch ausreichende Verteilung von Spritzpressmasse 30 erreicht z. B. in Ausbuchtungen 81 und Freischnitten 84 auf unterschiedlichen Seiten des Permanentmagneten 39.

Bezugnehmend auf Fig.9C wird eine besonders stabile axiale Sicherung des Permanentmagneten 39 mittels einer speziellen Ausführung eines Endpaketblechs 40B erreicht. Das ansonsten wie das mehrzählige Paketblech 40 ausgeführte Endpaketblech 40B weist eine wiederum abgewandelte Öffnung 80B auf, die ebenfalls einem Permanentmagneten 39 zugeordnet ist, jedoch nicht vom Permanentmagneten 39 durchsetzt ist. Dazu ist der Rand 89B der Öffnung 80B mit einer seitlichen Phase 82 versehen, die als Endanschlag für einen vormontierten Permanentmagneten 39 dient. Aufgrund des nochmals grösseren Umfangs des Randes 89B der Aufnahmeöffnung 80B (im Vergleich zum Rand 89A der Aufnahmeöffnung 80A) wird nicht nur eine axiale Abdichtung der Permanentmagnete 39 im Spritzwerkzeug wesentlich erleichtert sondern auch eine geringere Flächenpressung erreicht, was den gesamten Spritzpressvorgang sicherer macht. Beim Stanzpaketieren wird ein End-Paketblech 40B mit zu den mehrzähligen Paketblechen 40 des Rotorpaket 20 gestabelt. Dazu wird das End-Paketblech 40B nach dem Einbringen der Permanentmagnete 39 in ihre Schächte mit in das Presswerkzeug gelegt wird und zusammen mit der Rotorwelle 10 und dem Rotorpaket 20 mit Spritzpressmasse 30 allseitig verpresst wird.

Ein solcher Fügeprozess kann grundsätzlich bei jeder Art eines Rotorpakets gemäss den Niederspannungsrichtlinien angewendet werden. Insgesamt führen diese Maßnahmen zu einem nicht nur maßgenau ausgeführten Rotorpaket 20 mit exakt angeordneten Permanentmagneten 39, sondern darüberhinaus auch zu einem vergleichsweise in sich stabilen Rotorpaket 20 mit sicher angeordneten Permanentmagneten 39, die sowohl axial als auch radial gesichert sind. Zur besseren Handhabung beim Spritzpressen von Rotorpaket 20 und Rotorwelle 10 sind vorliegend die Permanentmagnete 39 zunächst unmagnetisiert. Als Stabmagnete können diese somit leichter in das Rotorpaket 20, d.h. in die durch die Aufnahmeöffnungen 80 gebildeten Schächte eingelegt werden. Außerdem muss auf eine Polarität der Permanentmagnete 39 zunächst nicht geachtet werden. Ebenso sind auch keine Anhaftungen am Permanentmagnet 39 während eines Spritzprozesses zu befürchten. Somit ist insbesondere der Eintrag von Schmutz in ein Spritzwerkzeug nahezu ausgeschlossen. Der umspritzte Rotor 100, wie er in Fig. 16 gezeigt ist, wird dann nachträglich unter Polung der Permanentmagnete 39 magnetisiert.

Maßgeblich für eine besonders gute Anbringung des Rotorpakets 20 an der Rotorwelle 10 ist die Ausbildung der zentralen Ausnehmung 70 im Paketblech 40 gemäß dem Konzept der Erfindung.

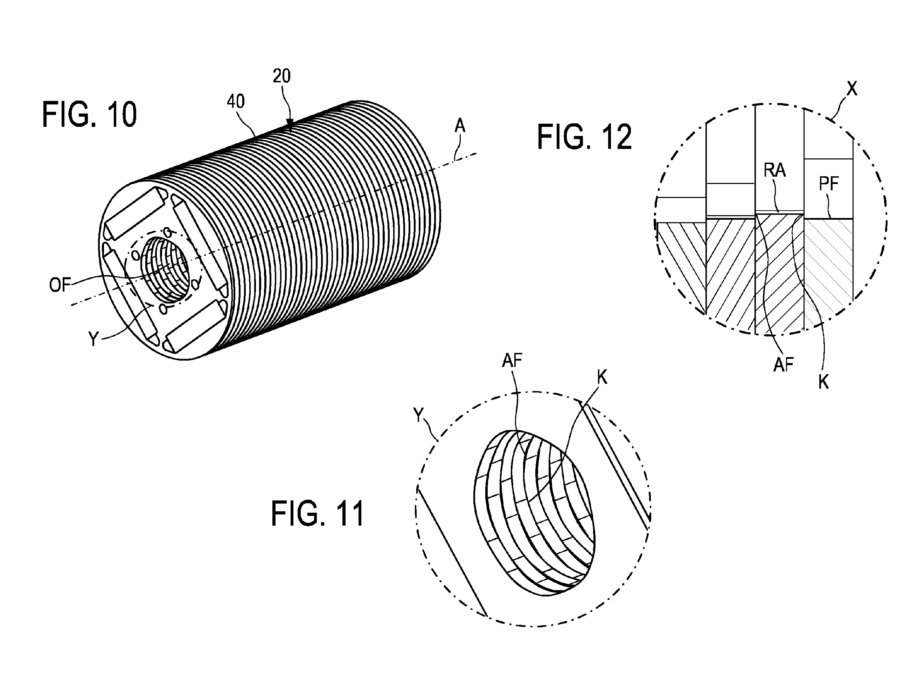

Nochmals bezugnehmend auf Fig. 6 ist das Rotorpaket der vorliegenden Ausführungsform aufgrund der von der Kreiskontur 72 abweichenden Kontur 72 eines Pentagons besonders sicher und verlässlich an der Rotorwelle 10 fixiert. Dazu wird das Pentagon als besondere geometrische Kontur 71 der zentralen Ausnehmung 70 im Paketblech 40 gebildet. Die Kontur 71 der zentralen Ausnehmung 70 ist vorliegend in Form eines fünfeckigen konvexen Bogenpolygons gebildet, das man auch als Pentagon bezeichnet. Die Kontur 71 kann auch als fünfeckiges Gleichdick bezeichnet werden. Gleichdicke sind Konturen konstanter Breite, d.h. dass jeder mögliche Querschnittsdurchmesser des Gleichdicks denselben Betrag hat. Außerdem hat ein Gleichdick eine ungeradzählige Vieleckigkeit - vorliegend fünf Ecken - und gleichlange Seiten. Die als Pentagon bezeichnete Kontur 71 der zentralen Ausnehmung 70 weist also eine von der vielzähligen Drehsymmetrie der Winkelanordnung der Pole abweichende Fünfeckigkeit auf. Dies führt dazu, dass ein erstes Paketblech 40 relativ zu einem zweiten Paketblech 40 bei einem hier vorgesehenen relativen Drehwinkel von 90° im Bereich der zentralen Ausnehmung 70 nicht kongruent aufeinander zu liegen kommt. Vielmehr sind die in Fig. 11 als Detail Y der Fig.10 vergrössert dargestellten Kanten K des Pentagons beim ersten Paketblech und zweiten Paketblech in radialer Richtung voneinander beabstandet. Bei der vorliegenden Ausführungsform kommen unter Wahrung der vierzähligen Drehsymmetrie - bis auf die zentrale Ausnehmung 70 - alle sonstigen Ausnehmungen eines Paketblechs 40 unter einer 90- Verdrehung desselben aufeinander zu liegen. Dies führt im Bereich der zentralen Ausnehmung 70 zur Bildung einer unebenen Oberfläche OF in Richtung der Achse A des Rotorpakets 20. Konkret werden beim Fertigungsschritt des Stanzpakettierens mittels den oben erläuterten Pakettierpunkten 90 die einzelnen Paketbleche 40 zu dem Rotorpaket 20 gestapelt und zwar derart, dass benachbarte Paketbleche 40 in Abhängigkeit der Mehrzähligkeit n der Drehsymmetrie der Polanordnung um einen Winkel 360°/n -vorliegend bei vier Polen um 90°- relativ zueinander verdreht werden. Vorliegend wird dadurch die geometrische Lage der Kontur 71 des Pentagons um 18° von Paketblech zu Paketblech verdreht -nämlich um die Differenz zwischen 90° und dem Gleichdickwinke, bei fünf Ecken von vorliegend 72°. Dies führt zur Bildung der oben angesprochenen unebenen Oberfläche OF. Die Unebenheiten in Form der Kanten K der Konturen 71 verlaufen also quer zur Achse A des Rotorpakets 20.

In der in Fig. 10 gezeigten perspektivischen Ansichten des isolierten Rotorpakets 20 mit den einzelnen Paketblechen 40 und dem in Fig. 11 gezeigten vergrößerten Detail Y und in Fig. 12 gezeigten vergrößerten Detail X ist näher ersichtlich, dass die unebene Oberfläche OF mit den Kanten K sowie den angerenzenden Flächen AF der zentralen Ausnehmung 70 und den durch innere Ringflächen gebildeten Pressfläche PF gebildet ist. Vergrößerte Spalträume bzw. die Pressflächen PF ergeben sich vor allem im Bereich der aus Fig. 6 ersichtlichen Rundheitsabweichungen RA, d. h. dort wo die Kontur 71 des Pentagon von der Kreiskontur 72 abweicht. Die unregelmäßige Oberfläche OF auf der Innenmantelseite des Rotorpakets 20 ist durch die voneinander distanzierten Kanten K in den verdickten Bereichen der Fig. 11 erkennbar.

Konkret können die an den erkennbaren Kanten K hervortretenden, aus Fig. 12 ersichtlichen Pressflächen PF der unregelmäßigen Oberfläche OF bei presspassendem Aufbringen des Rotorpakets 20 auf die Rotorwelle 10 in die danebenliegenden wellenförmigen Rundheitsabweichungen RA fließen. Unter anderem verkeilen die Paketbleche 40 auf der Rotorwelle 10 dadurch. Aufgrund der unregelmäßigen Oberfläche OF auf der Innenmantelseite 22 des Rotorpakets 20 stellt sich eine besonders gute Presspassung des Rotorpakets 20 an der Rotorwelle 10 ein, ohne dass die Rotorwelle 10 an der Oberfläche besonders bearbeitet werden müsste. Auch lassen sich die oben genannten vergrößerten Spalträume gut mit Spritzpressmasse 30 füllen. Die Rotorwelle kann in mehr oder weniger roh gefertigter Form zur Verfügung gestellt werden.

Zur Bildung einer vorteilhaften Presspassung ist ein in Fig. 6 dargestellter mittlerer Durchmesser D der Kontur 71 des Pentagons nur wenig größer als ein Außendurchmesser d der in Fig. 4 dargestellten Rotorwelle 10 zu wählen. Anders ausgedrückt liegt ein Außendurchmesser d zwischen einem Innendurchmesser Di des Pentagons und einem Außendurchmesser Da desselben, d. h. bei einer oben beschriebenen Presspassung von Paketblech 40 und Rotorwelle 10 gibt es nur fünf Pressflächen. Dies reduziert vorteilhaft notwendige Einpresskräfte, wobei dennoch eine sichere Presspassung erreicht wird.

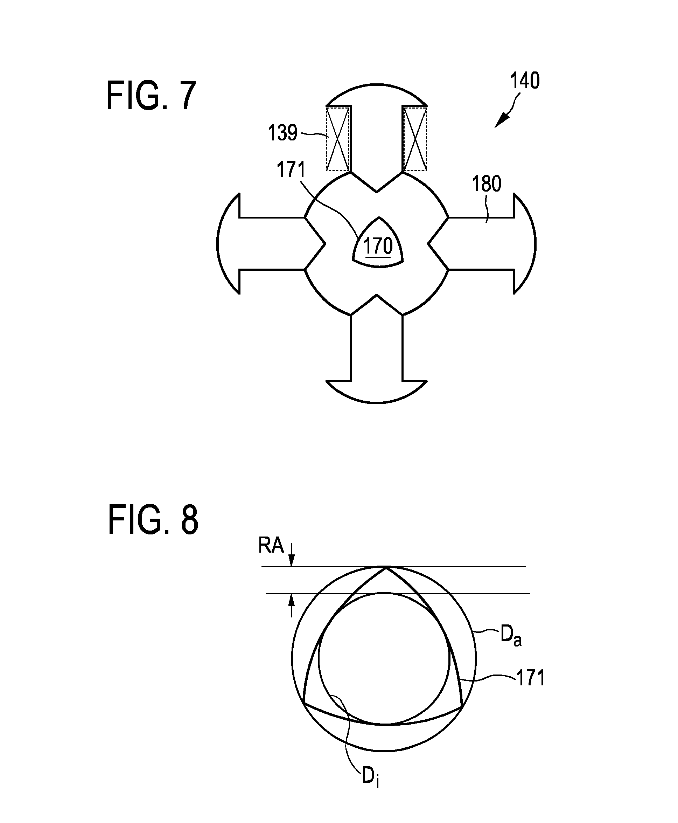

Im Beispiel wird die weitere Ausführung einer zentralen Ausnehmung 170 aus der Ausführungsform der Fig. 7 und Fig. 8 erkennbar. Fig. 7 zeigt dazu eine alternative Ausführung eines mehrzähligen Paketblechs 140, das eine Anzahl von an peripheren Winkelpositionen angeordnete Aufnahmestrukturen in Form jeweils eines Ankerzahns 180 aufweist. Die Winkelpositionen entsprechen dabei 90°, 180°, 270° und 360° gemäß einer vierzähligen Drehsymmetrie, sodass bei fortlaufender Verdrehung von benachbarten Paketblechen 140 um jeweils 90° die Ankerzähne 180 kongruent aufeinander zu liegen kommen. Auf diese Weise wird eine Aufnahme in Form eines Ankers am Rotorpaket ausgebildet. Der Anker dient dann zur Aufnahme einer in Fig. 7 symbolisch eingezeichneten Spulenwicklung 139, die als polbildendes Element einen Pol am Rotorpaket ausbildet. Die Pole des mit einem Paketblech 140 der Fig. 7 ausgebildeten Rotorpakets sind gemäß der vierzähligen Drehsymetrie bei Winkeln von 90°, 180°, 270° und 360° positioniert. Das Paketblech 140 weist außerdem eine zentrale Ausnehmung 170 mit einer Kontur 171 auf, die bei Verdrehung von benachbarten Paketblechen 140 nicht kongruent zueinander angeordnet werden. Die Kontur 171 hat bei der in Fig. 7 gezeigten Ausführungsform eines Paketblechs die Form eines konvexen bogendreieckigen Gleichdicks, nämlich eines sogenannten Reuleauxdreiecks.

Das Reuleauxdreieck der Kontur 171 ist in Fig. 8 mit einem eingeschriebenen Kreis sowie einem umschriebenen Kreis vergrößert dargestellt. Der eingeschriebene Kreis liefert vorliegend einen Innendurchmesser Dᵢ des Reuleauxdreiecks. Der umschriebene Kreis liefert vorliegend einen Außendurchmesser Dₐ des Reuleauxdreiecks. Die Kontur 171 der zentralen Ausnehmung 170 verläuft mit einer Rundheitsabweichung RA zwischen dem eingeschriebenen Kreis mit einem Innendurchmesser Dᵢ und dem umschriebenen Kreis mit einen Außendurchmesser Dₐ, hat also eine Amplitude von Dₐ ― Dᵢ. Analog gilt dies für das in Fig. 6 dargestellte Pentagon mit der dort bezeichneten Rundheitsabweichung RA in Bezug auf den mittleren Durchmesser D. Dieser ergibt sich als Mittel aus einem im Fig. 6 nicht dargestellten Innendurchmesser Dᵢ eines eingeschriebenen Kreises und einem Außendurchmesser Dₐ eines umschriebenen Kreises.

Vorliegend ergibt sich eine Rundheitsabweichung RA für die Ausführungsform der Fig. 6 und die Ausführungsform der Fig. 8 deren Amplitude zwischen 0,5 % und 2 % eines mittleren Durchmessers D aus Innendurchmesser Di und Außendurchmesser Dₐ beträgt. Es hat sich gezeigt, dass eine so gewählte Amplitude für die Rundheitsabweichung RA besonders gut geeignet ist die in Fig. 12 dargestellten Pressflächen PF einerseits und vergrößerten Spalträume andererseits mittels der Rundheitsabweichungen RA ausbilden. Entsprechend treten die Kanten K und Anlageflächen AF zur Ausbildung der unregelmäßigen Oberfläche OF vor. Mittels Sprizpresspassung lässt sich das Rotorpaket 20 besonders fest und positionsgenau selbst an einer roh bearbeiteten oder unbearbeiteten, oder gegebenenfalls auch glatten Rotorwelle 10 anbringen.

In einer aus Fig. 13 bis Fig. 15 ersichtlichen Ausführungsform wird vorliegend der Außendurchmesser d der Rotorwelle 10 kleiner als ein mittlerer Durchmesser D des Pentagons der Kontur 71 der zentralen Ausnehmung 70 der Fig. 6 gewählt. Dies führt zu einer in Fig. 15 detailliert dargestellten Verteilung von Spritzpressmasse 30, die -wie aus dem Detail Z der Fig. 14 ersichtlich ist- einen zwischen Innenmantelseite 22 des Rotorpakets 20 und einer Außenmantelseite 12 der Rotorwelle 10 liegenden Spaltraum 31 mit Spritzpressmasse 30 füllt. Dadurch wird das Rotorpaket 20 komplett von der Rotorwelle 10 isoliert. Fig. 15 zeigt dazu die im Rahmen des Spritzpressens erreichte Verteilung der Spritzpressmasse 30 ohne Rotorpaket 20 im Detail auf der Rotorwelle 10. Die durch die gegeneinanderverdrehten und somit distanzierten Kanten K werden an die Kontur 71 der zentralen Ausnehmung angrenzende Flächen AF der unebenen Oberfläche OF freigelegt. Diese ermöglicht am Rahmen der erläuterten Spritzpresspassung eine besonders verlässliche axial als auch umfänglich verdrehsichere Fixierung des Rotorpakets 20 auf der Rotorwelle 10.

Auch die vorerwähnten Permanentmagnete 39 sind - unterstützt durch die Ausbildung der Paketbleche 40, 40A, 40B - von der Spritzpressmasse 30 allseitig umschlossen.

Auch der stirnseitige in Fig. 16 gezeigte Spritzpressmassenkopf 37 dient dazu, die Permanentmagneten 39 allseitig zu umschließen, sodass die Permanentmagnete 39 exakt positioniert und spielfrei fixiert sind. Die Länge der Permanentmagnete 39 ist dazu, wie aus Fig.4 anschaulich ersichtlich, mindestens um zwei Blechlängen (des Anfangs-Paketbleches 40A und des End-Paketbleches 40B) kürzer als die Länge des Rotorpakets 20. Fig. 16 zeigt den schon erwähnten, bis auf Lüfterrad 60 und Lager 50 komplettierten umspritzten Rotor 100. Ein kodiertes Einlegen der Paketbleche 40 mit ihren Randausnehmungen führt zu Bildung der Randnut 21.

Die kodierte Festlegung der Paketbleche 40 unterstützt weiter ein kodiertes Aufbringen einer hier nochmals abgewandelt gezeigten Lager- und Lüfteraufnahme 33'. Diese weist außer einer Vielzahl von Stegen 36' auch wenigstens eine plane Fläche 38 auf, welche parallel zum vorliegend längeren Abschnitt des Rands 89 einer Aufnahmeöffnung 80 für einen Permanentmagneten 39 ausgerichtet ist. Dadurch wird eine zur Fig. 3 alternative Kodierung auf einer Lager- und Lüfteraufnahme 33' im Vergleich zur Lager- und Lüfteraufnahme 33 der Fig. 3 gebildet. Auch hier wird ein Lüfterrad 60 auf das herausstehende Rotorwellenende mit seinem kodierten, an der Lager- und Lüfteraufnahme 33' angebrachten Lüftersitz 35' aufgepresst und schließlich mit einer in Fig. 17 gezeigten Krallscheibe 63 axial gesichert. D.h. die vier aus Fig. 2 ersichtlichen Pole N-S-N-S des Magnetrings 62 können exakt - ohne Winkelfehler - zu der planen Fläche 38 des Lüftersitz 35' angeordnet werden.

Fig. 17 zeigt den bereits erwähnten fertig assemblierten Elektromotor 1000 mit Rotor 100 und Stator 200. Am Stator 200 des Elektromotors 1000 sind auf einer Leiterplatte 210 im Winkel von 60° drei Hall-Sensoren 220 angeordnet, die eine Lage des Rotors 100 erfassen können - dies ermöglicht eine elektronische Regelung des Elektromotors 1000. Die Leiterplatte 210 ist ihrerseits kodiert auf einer Trägerplatte 230 des Stators befestigt, vorliegend durch Heißverstemmen. Die drei Hall-Sensoren 220 stehen jeweils zwischen den Statorspulen 240, d.h. die Trägerplatte 230 ist ebenfalls kodiert mit dem Statorgehäuse 250 verbunden. Vorliegend geschieht dies mittels Formschluss an der Wickelstütze 260 des Stators 200.

Die Bauteile Paketblech 40, Lager- und Lüfteraufnahme 33 sowie Trägerplatte 230 bzw. Leiterplatte 210 weisen aufeinander abgestimmte Kodierungen auf. Bei einer die Kodierung nutzenden einfachen Montage der einzelnen Bauteile entfallen aufwendige Justierarbeiten zur Lageerkennung des Rotors 100 und zur Steuerung des Elektromotors 1000.

## Patentansprüche

1. Rotor (100) für einen Elektromotor (1000), wobei der Rotor (100) aufweist:
- eine Rotorwelle (10);
- ein an der Rotorwelle (10) angebrachtes Rotorpaket (20) mit einer Anzahl von entlang einer Achse (A) des Rotorpakets (20) angeordneten Paketblechen (40, 140) und mit einer Anzahl von Polen wenigstens eines Polpaares, wobei ein Paketblech (40, 140) aufweist:
eine zentrale von der Rotorwelle (10) durchsetzte, eine Kontur (71, 171) aufweisende Ausnehmung (70, 170) und daran angrenzende Flächen (AF) und eine Anzahl von an peripheren Winkelpositionen angeordnete Aufnahmestrukturen zur Bildung jeweils einer Aufnahme für ein polbildendes Element am Rotorpaket (20), **dadurch gekennzeichnet, dass** das Rotorpaket eine der Rotorwelle (10) zugewandte Oberfläche (OF) hat, die mit den angrenzenden Flächen (AF) der zentralen Ausnehmung (70, 170) der Anzahl von Paketblechen (40, 140) gebildet ist und die mit den Konturen (71, 171) der zentralen Ausnehmungen (70) der Anzahl von Paketblechen (40, 140) gebildete Unebenheiten quer zur Achse (A) des Rotorpakets (20) aufweist, wobei
die Konturen (71, 171) der zentralen Ausnehmungen (70, 170) wenigstens eines ersten und zweiten Paketblechs der Anzahl von Paketblechen (40, 140) nichtkongruent zueinander angeordnet sind.

2. Rotor (100) nach Anspruch 1, **dadurch gekennzeichnet, dass**
- ein Pol wenigstens eines Polpaares mittels eines polbildenden Elements in Form eines Permanentmagneten (39) gebildet ist, wobei ein Permanentmagnet (39) in einer als Aufnahmeöffnung (80) gebildeten Aufnahmestruktur angeordnet ist, mittels der eine Aufnahme in Form eines Schachtes für den Permanentmagneten (39) im Rotorpaket (20) ausgebildet ist oder
- ein Pol wenigstens eines Polpaares mittels eines polbildenden Elements in Form einer Spulenwicklung (139) gebildet ist, wobei eine Spulenwicklung (139) auf einer als Ankerzahn (180) gebildeten Aufnahmestruktur angeordnet ist, mittels dem eine Aufnahme in Form eines Ankers für die Spulenwicklung (139) am Rotorpaket (20) ausgebildet ist.

3. Rotor (100) nach einem der Ansprüche 1 oder 2,
**dadurch gekennzeichnet, dass** die zentrale von der Rotorwelle (10) durchsetzte Ausnehmung (70, 170) eine Kontur (71,171) hat, die eine von einer mehrzähligen, insbesondere geradzähligen, Drehsymmetrie der Anzahl von Aufnahmestrukturen abweichende mehrzählige, insbesondere ungeradzählige, Drehsymmetrie aufweist.

4. Rotor (100) nach einem der Ansprüche 1 bis 3,
**dadurch gekennzeichnet, dass** die zentrale Ausnehmung (70, 170) eines Paketbleches (40) eine Kontur (71, 171) in Form eines Polygons oder eines konvexen bogen-vieleckigen Gleichdicks hat.

5. Rotor (100) nach Anspruch 4,
**dadurch gekennzeichnet, dass** das Gleichdick in Form eines Reuleaux-Dreiecks oder eines Pentagons oder eines siebeneckiges konvexen Bogenpolygons gebildet ist.

6. Rotor (100) nach einem der Ansprüche 1 bis 5, **dadurch gekennzeichnet, dass** die Kontur (71, 171) der zentralen Ausnehmung (70, 170) mit einer Rundheitsabweichung (RA) zwischen einem eingeschriebenen Kreis mit einem Innendurchmesser (Dᵢ) und einem umschriebenen Kreis mit einem Außendurchmesser (Dₐ) verläuft und die Rundheitsabweichung (RA), grösser als 0.1%, insbesondere grösser als 0.5% insbesondere kleiner als 5%, insbesondere kleiner als 2% eines Mittels (D) aus Innendurchmesser (Dᵢ) und Außendurchmesser (Dₐ) ist.

7. Rotor (100) nach einem der Ansprüche 1 bis 6,
**dadurch gekennzeichnet, dass** das erste und zweite Paketblech, insbesondere jeweils benachbarte Paketbleche, der Anzahl von Paketblechen (40, 140) relativ zueinander unter Bildung einer Aufnahme für ein polbildendes Element am Rotorpaket (20) verdreht ist wobei die Konturen (71, 171) der zentralen Ausnehmungen (70, 170) nichtkongruent zueinander verdreht sind.

8. Rotor (100) nach einem der Ansprüche 1 bis 7,
**dadurch gekennzeichnet, dass** ein Paketblech (40, 140) eine Anzahl von Kodiermarken aufweist, mittels der das erste Paketblech relativ zu dem zweiten Paketblech derart verdreht festlegbar ist, dass eine Aufnahme für ein polbildendes Element gebildet ist.

9. Rotor (100) nach Anspruch 2, **dadurch gekennzeichnet, dass** ein vielzähliges Paketblech (40) einer Anzahl von Paketblechen eine Anzahl von an peripheren Winkelpositionen angeordnete, jeweils von einem Permanentmagneten (39) durchsetzte, im wesentlichen rechteckige Aufnahmeöffnungen (80) hat, wobei eine Aufnahmeöffnung (80) einen Rand (89) hat, der eine seitliche Ausbuchtung (81) und/oder eine seitliche Freischneidung (84) zur Aufnahme von Spritzpressmasse (30) ausbildet.

10. Rotor (100) nach Anspruch 2 oder 9, **dadurch gekennzeichnet, dass** das Rotorpaket (20) wenigstens ein Rand-Paketblech (40A, 40B) aufweist, das eine zentrale von der Rotorwelle (10) durchsetzte Ausnehmung (70, 170), und
eine Anzahl von an peripheren Winkelpositionen angeordnete, jeweils einem Permanentmagneten (39) zugeordnete, im wesentlichen rechteckige Öffnungen (80A, 80B) mit einem Rand (89A, 89B) hat, insbesondere einen Rand (89B), der eine seitliche Phase (82) und/oder einen Rand (89A'), der eine die Öffnung (80A') teilenden Steg (83) aufweist.

11. Rotor (100) nach einem der Ansprüche 1 bis 10, **dadurch gekennzeichnet, dass** das Rotorpaket (20) mit Spritzpressmasse (30) axial und radial umfasst ist, insbesondere vollständig mit Spritzpressmasse (30) umfasst ist.

12. Rotor (100) nach einem der Ansprüche 1 bis 11,
**dadurch gekennzeichnet, dass** die Rotorwelle (10) eine Lager- und/oder Lüfteraufnahme (33, 33') mit einem Keilwellenprofil (34) und/oder wenigstens einer Kodierung aufweist, mittels der ein Lager (50) und/oder ein Lüfterrad (60) vorherbestimmt verdrehsicher anzuordnen ist relativ zu der Anzahl von an peripheren Winkelpositionen angeordneten Aufnahmestrukturen zur Bildung jeweils einer Aufnahme für ein polbildendes Element.

13. Rotor (100) nach einem der Ansprüche 1 bis 12,
**dadurch gekennzeichnet, dass** eine Kodierung der Lager- und/oder Lüfteraufnahme (33) eine Anzahl von Stegen (36) aufweist, welche der Anzahl von Polen entspricht und/oder die an Winkelpositionen angeordnet sind, die den Winkelpositionen von Aufnahmestrukturen zur Bildung jeweils einer Aufnahme für ein polbildendes Element entsprechen.

14. Rotor (100) nach einem der Ansprüche 1 bis 13,
**dadurch gekennzeichnet, dass** eine Kodierung der Lager- und/oder Lüfteraufnahme (33') wenigstens eine plane Fläche (38) aufweist, die parallel zu einer Querschnittsseite einer Aufnahmestruktur ist und/oder die an einer Winkelpositionen angeordnet ist, die wenigstens einer Winkelposition von Aufnahmestrukturen zur Bildung jeweils einer Aufnahme für ein polbildendes Element entspricht.

15. Rotor (100) nach einem der Ansprüche 1 bis 14,
**dadurch gekennzeichnet, dass** ein an der Rotorwelle (10) angebrachtes Lüfterrad (60) einen Magnetring (62) mit Polen (N , S) und/oder Lüfterschaufeln (61) aufweist, die an Winkelpositionen angeordnet sind, die den Winkelpositionen von Aufnahmestrukturen zur Bildung jeweils einer Aufnahme für ein polbildendes Element entsprechen.

16. Herstellungsverfahren für einen Rotor (100), insbesondere für einen Elektromotor (1000) mit einer magnetisch gekoppelten Anordnung aus Rotor (100) und Stator (200), der eine Anzahl von wenigstens einem Polpaar des Rotors (100) zugeordnete Statorpolen aufweist, aufweisend die Schritte:
- Bereitstellen der Rotorwelle (10);
- Anbringen eines Rotorpakets (20) an der Rotorwelle (10) mit einer Anzahl von entlang einer Achse (A) des Rotorpakets (20) angeordneten Paketblechen (40) und einer Anzahl von an peripheren Winkelpositionen angeordneten Permanentmagneten (39) zur Ausbildung von Polen wenigstens eines Polpaares,
wobei ein Paketblech (40) aufweist:
eine zentrale von der Rotorwelle (10) durchsetzte eine Kontur (71) aufweisende Ausnehmung (70) und daran angrenzende Flächen (AF), und
eine Anzahl von an peripheren Winkelpositionen angeordnete Aufnahmeöffnungen (80) zur Bildung jeweils eines Schachtes für einen
Permanentmagneten (39) im Rotorpaket (20),
und wobei das Anbringen erfolgt durch:
- Verdrehtes Anordnen eines ersten Paketblechs relativ zu einem zweiten Paketblech unter Bildung des von dem Permanentmagneten (39) durchsetzten Schachts im Rotorpaket (20) und
unter Bildung einer der Rotorwelle (10) zugewandte Oberfläche (OF) des Rotorpakets (20) mit den angrenzenden Flächen (AF) der zentralen Ausnehmungen (70) der Anzahl von Paketblechen (40) und mit Unebenheiten quer zur Achse (A) des Rotorpakets (20), die durch die Konturen (71) der zentralen Ausnehmungen (70) der Anzahl von Paketblechen (40) entstehen,
indem die Konturen (71) der zentralen Ausnehmungen (70) wenigstens eines ersten und zweiten Paketblechs der Anzahl von Paketblechen (40) nichtkongruent zueinander angeordnet werden;
- Spritzpressen von Spritzpressmasse (30) axial und/oder radial um das Blechpaket (20).

17. Herstellungsverfahren nach Anspruch 16 **dadurch gekennzeichnet, dass** ein Paketblech (40) eine Anzahl von Kodiermarken aufweist und das Rotorpaket (20) in ein Spritzwerkzeug mittels der Anzahl von Kodiermarken kodiert eingelegt wird, wobei das erste Paketblech relativ zu dem zweiten Paketblech unter Bildung eines von dem Permanentmagneten (39) durchsetzten Schachts im Rotorpaket (20) verdreht angeordnet wird.

18. Herstellungsverfahren nach Anspruch 16 oder 17 **dadurch gekennzeichnet, dass** die Anzahl von Aufnahmeöffnungen (80) an ersten peripheren Winkelpositionen gemäß einer geradzähligen Drehsymmterie angeordnet sind, insbesondere die Anzahl von Kodiermarken an zweiten peripheren Winkelpositionen gemäß der geradzähligen Drehsymmterie oder einer niederen geradzähligen Drehsymmetrie angeordnet sind, und die zentrale von der Rotorwelle (10) durchsetzte Ausnehmung (70) eine Kontur (71) mit einer ungeradzähligen Drehsymmetrie hat und wobei das erste und zweite Paketblech (40) relativ zueinander gemäß der geradzähligen Drehsymmetrie, insbesondere einer niederen geradzähligen Drehsymmetrie, verdreht werden.

19. Herstellungsverfahren nach einem der Ansprüche 16 bis 18 **dadurch gekennzeichnet, dass**
das Rotorpaket (20) mittels Spritzpressung und/oder Presspassung an der Rotorwelle (10) angebracht wird, wobei ein Außendurchmesser (D) der Rotorwelle (10) zwischen einem Innendurchmesser (Dᵢ) eines durch einen eingeschriebenen Kreis definierten inneren Zylinders und einem Aussendurchmesser (Dₐ) eines durch einen umschriebenen Kreis definierten äusseren Zylinders der der Rotorwelle (10) zugewandten Oberfläche (OF) des Rotorpakets (20) liegt, und
ein zwischen Rotorwelle (10) und der Kontur (71) der Ausnehmung (70) gebildeter Spaltraum, insbesondere vom Maß einer Rundheitsabweichung (RA), mit Spritzpressmasse (30) befüllt wird und/oder eine an die Kontur (71) angrenzende Pressfläche (PF) der Ausnehmung (70), insbesondere fließend verformt, an die Rotorwelle (10) gepresst wird.
